# EUROPEAN PATENT APPLICATION

(11) **EP 4 109 959 A1**
(43) Date of publication of application: **28.12.2022**
(21) Application number: 21767643.6
(22) Date of filing: 05.03.2021
(51) Int. Cl.: H04W 24/08

(54) **IN-SITU FLOW TESTING METHOD AND DEVICE**

(30) Priority: 10.03.2020 CN 202010161932; 30.03.2020 CN 202010236422
(71) Applicant: Huawei Technologies Co., Ltd., Shenzhen, Guangdong 518129, (CN)
(72) Inventor: SHU, Qinghui, Shenzhen, Guangdong 518129 (CN); HUANG, Jinming, Shenzhen, Guangdong 518129 (CN); ZHOU, Tianran, Shenzhen, Guangdong 518129 (CN); CHEN, Peng, Shenzhen, Guangdong 518129 (CN); GUO, Songsong, Shenzhen, Guangdong 518129 (CN); LI, Xiangzhen, Shenzhen, Guangdong 518129 (CN); TANG, Yan, Shenzhen, Guangdong 518129 (CN); ZHENG, Chengcong, Shenzhen, Guangdong 518129 (CN)
(74) Representative: Maiwald GmbH
(86) International application number: PCT/CN2021/079204
(87) International publication number: WO 2021/179994

(57) **Abstract**

Embodiments of this application disclose an in-situ flow detection method. When determining a transmission delay in a detection domain in a first in-situ flow detection period, a first network node may color a plurality of packets in a first service flow that are received by the first network node through a first inbound interface, and determine the delay in the detection domain in the first in-situ flow detection period based on the plurality of colored packets. In the manner of coloring a plurality of packets, even if packet loss occurs on one or more of the packets, the transmission delay in the detection domain in the first in-situ flow detection period may be determined based on another packet on which no packet loss occurs. In addition, determining the transmission delay in the detection domain in the first in-situ flow detection period based on a plurality of packets has higher precision than determining the transmission delay in the detection domain in the first in-situ flow detection period based on one packet. In conclusion, using the solutions provided in embodiments of this application can improve the precision of the detected transmission delay in the detection domain.

## Description

This application claims priorities to Chinese Patent Application No. 202010161932.X, filed with the China National Intellectual Property Administration on March 10, 2020 and entitled "PER-PACKET IN-SITU FLOW DETECTION METHOD AND APPARATUS", and to Chinese Patent Application No. 202010236422.4, filed with the China National Intellectual Property Administration on March 30, 2020 and entitled "IN-SITU FLOW DETECTION METHOD AND APPARATUS", both of which are incorporated herein by reference in their entireties.

### TECHNICAL FIELD

This application relates to the communication field, and in particular, to an in-situ flow detection method and apparatus.

### BACKGROUND

In a data communication network, a delay of the data communication network may be detected using an in-situ flow detection technology, for example, an in-situ flow information telemetry (in-situ flow information telemetry, iFIT) technology, to determine quality of service of the network.

Currently, precision of the delay of the data communication network that is detected using the in-situ flow detection technology is not high, and consequently the quality of service of the network cannot be accurately evaluated. Therefore, a solution is required to resolve the foregoing problem.

### SUMMARY

Embodiments of this application provide an in-situ flow detection method, to improve precision of a detected delay of a data communication network.

According to a first aspect, an embodiment of this application provides an in-situ flow detection method. The method may be performed by a first network node in a detection domain. When determining a transmission delay in the detection domain in a first in-situ flow detection period, the first network node may color a plurality of packets in a first service flow that are received by the first network node through a first inbound interface, and determine the delay in the detection domain in the first in-situ flow detection period based on the plurality of colored packets. Specifically, the first network node may receive each of the plurality of packets through the first inbound interface, and then the first network node encapsulates, into in-situ flow detection information of each received packet, a first timestamp at which each packet is received, and forwards each packet encapsulated with the first timestamp to a first outbound interface. The first timestamp of each packet indicates a moment at which the first network node receives each packet through the first inbound interface. That is, a first timestamp of a first packet indicates a moment at which the first network node receives the first packet through the first inbound interface. In this embodiment of this application, when the transmission delay in the detection domain in the first in-situ flow detection period is determined, a plurality of packets, instead of one packet, in the first in-situ flow detection period are colored. When only one packet is colored, if packet loss occurs on the colored packet, the transmission delay in the detection domain in the first in-situ flow detection period cannot be determined. However, in the manner of coloring a plurality of packets, even if packet loss occurs on one or more of the packets, the transmission delay in the detection domain in the first in-situ flow detection period may be determined based on another packet on which no packet loss occurs. In addition, determining the transmission delay in the detection domain in the first in-situ flow detection period based on a plurality of packets has higher precision than determining the transmission delay in the detection domain in the first in-situ flow detection period based on one packet. In conclusion, using the solution provided in this embodiment of this application can improve the precision of the detected transmission delay in the detection domain.

In a possible implementation, the first network node colors each packet in the first service flow, and determines the delay of the first service flow in the first in-situ flow detection period based on each colored packet. Specifically, the plurality of packets received through the first inbound interface are all packets received through the first inbound interface. Coloring each packet in the first service flow for delay detection can further improve transmission delay detection precision.

In a possible implementation, the in-situ flow detection is iFIT in-situ flow detection.

In a possible implementation, the in-situ flow detection information includes indication information, and the indication information indicates that the in-situ flow detection is end-to-end per-packet in-situ flow detection and/or hop-by-hop per-packet in-situ flow detection.

In a possible implementation, the plurality of packets in the first service flow that are received in the first in-situ flow detection period include the first packet, and the first network node encapsulates the first timestamp of the first packet into the in-situ flow detection information of the first packet. During specific implementation, for example, the first network node may encapsulate the first timestamp of the first packet into a first flow instruction extension header FIEH of first iFIT in-situ flow detection information of the first packet.

In a possible implementation, the first iFIT in-situ flow detection information further includes indication information, and the indication information indicates that the in-situ flow detection is end-to-end per-packet in-situ flow detection and/or hop-by-hop per-packet in-situ flow detection. After a node supporting an iFIT technology in the detection domain receives a packet including the first iFIT in-situ flow detection information, the node may determine, based on the indication information in the first iFIT in-situ flow detection information, a specific detection operation to be performed.

In this application, the end-to-end in-situ flow detection means that in-situ flow detection is performed from a network node to another network node. For example, a tail node may perform a step of detecting an end-to-end transmission delay from a head node to the tail node, or a transit node may perform a step of detecting an end-to-end transmission delay from the head node or any upstream node to the transit node. The per-packet in-situ flow detection means that the head node colors a plurality of packets in the first service flow. Correspondingly, the end-to-end transmission delay from the head node to the tail node that is calculated by the tail node is obtained through calculation based on the plurality of colored packets. The hop-by-hop in-situ flow detection means that each node that supports an in-situ flow detection technology and that receives the colored packet needs to perform in-situ flow detection on the transmission delay. The hop-by-hop per-packet in-situ flow detection means that each node supporting the in-situ flow detection performs in-situ flow detection on each received packet.

In a possible implementation, for hop-by-hop per-packet in-situ flow detection, the first network node may receive, through the first outbound interface, each packet that is from the first inbound interface and that is encapsulated with the first timestamp. Both the first outbound interface and the first inbound interface are communication interfaces of the first network node, the first inbound interface is an interface through which the first network node communicates with an upstream node, and the first outbound interface is an interface through which the first network node communicates with a downstream node (namely, a second network node). To enable a downstream network node supporting the in-situ flow detection technology to calculate a transmission delay between the first network node and the downstream network node, the first network node may update the first timestamp of each of the plurality of packets to a second timestamp of each packet, and the second timestamp of each packet indicates a moment at which each packet is received through the first outbound interface. After updating the first timestamp of each packet to the second timestamp of each packet, the first network node may send, through the first outbound interface to the second network node, each packet encapsulated with the second timestamp. The first network node mentioned herein may be a head node or a transit node in the detection domain.

In a possible implementation, if the indication information indicates the end-to-end per-packet in-situ flow detection and the hop-by-hop per-packet in-situ flow detection, to enable the transit node or the tail node in the detection domain to calculate an end-to-end transmission delay from the transit node or the tail node to the head node, after receiving, through the first outbound interface, each packet that is from the first inbound interface and that is encapsulated with the first timestamp, the first network node serving as the head node no longer replaces the first timestamp with the second timestamp when encapsulating the second timestamp of each packet into the in-situ flow detection information of each packet, instead, on the premise that the first timestamp is retained, the first network node encapsulates the second timestamp into the in-situ flow detection information of each packet. In other words, after the first network node encapsulates the second timestamp of each packet into the in-situ flow detection information of each packet, each packet carries both the first timestamp and the second timestamp. Then, the first network node may send, to the second network node through the first outbound interface, each packet encapsulated with the first timestamp and the second timestamp. In this way, the network node that supports the iFIT technology and that receives each packet can calculate the end-to-end delay between the network node and the head node, an internal transmission delay of the node, and a link transmission delay between two adjacent network nodes supporting the iFIT technology.

In a possible implementation, the first network node may determine a transmission delay of each packet in the first network node based on the first timestamp of each packet and the second timestamp of each packet, and determine, based on the transmission delay of each packet in the first network node, a transmission delay of internal transmission of the first service flow in the first network node in the first in-situ flow detection period. Because the transmission delay of the internal transmission of the first service flow in the first network node in the first in-situ flow detection period is determined with reference to transmission delays of the plurality of packets in the first network node, accuracy is relatively high.

In a possible implementation, for hop-by-hop per-packet in-situ flow detection, the first network node serving as a tail node may further perform the following steps: The first network node receives, through the first outbound interface, each packet that is encapsulated with the first timestamp and that is from the first inbound interface; the first network node determines a second timestamp of each packet, where the second timestamp of each packet indicates a moment at which each packet is received through the first outbound interface; the first network node determines, based on the first timestamp carried in each packet and the second timestamp of each packet, a transmission delay of each packet in the first network node; and the first network node determines, based on the transmission delay of each packet in the first network node, a transmission delay of internal transmission of the first service flow in the first network node in the first in-situ flow detection period. That is, the tail node in the detection domain may calculate a transmission delay of internal transmission of the first service flow in the tail node in the first in-situ flow detection period.

In a possible implementation, after determining the transmission delay of internal transmission of the first service flow in the first network node in the first in-situ flow detection period, the first network node may further report the determined transmission delay to a controller, so that the controller analyzes the transmission delay to determine performance of the detection domain.

In a possible implementation, it is considered that a maximum transmission delay of internal transmission of the first service flow in the first network node in the first in-situ flow detection period, a minimum transmission delay of internal transmission of the first service flow in the first network node in the first in-situ flow detection period, and an average transmission delay of internal transmission of the first service flow in the first network node in the first in-situ flow detection period can all reflect the transmission delay of internal transmission of the first service flow in the first network node in the first in-situ flow detection period. Therefore, the transmission delay of internal transmission of the first service flow in the first network node in the first in-situ flow detection period may include any one or more of the maximum transmission delay of internal transmission of the first service flow in the first network node in the first in-situ flow detection period, the minimum transmission delay of internal transmission of the first service flow in the first network node in the first in-situ flow detection period, and the average transmission delay of internal transmission of the first service flow in the first network node in the first in-situ flow detection period. The maximum transmission delay of internal transmission of the first service flow in the first network node in the first in-situ flow detection period refers to a maximum value of transmission delays of the plurality of packets in the first network node; the minimum transmission delay of internal transmission of the first service flow in the first network node in the first in-situ flow detection period refers to a minimum value of the transmission delays of the plurality of packets in the first network node; and the average transmission delay of internal transmission of the first service flow in the first network node in the first in-situ flow detection period refers to an average value of the transmission delays of the plurality of packets in the first network node.

In a possible implementation, if the first network node is a transit node or a tail node in the detection domain, the first network node receives each of the plurality of packets through the first inbound interface. During specific implementation, for example, the first network node may receive, through the first inbound interface, each packet sent by a third network node. The third network node is an upstream node of the first network node, the third network node is connected to the first inbound interface through a second outbound interface, each received packet carries a third timestamp, and the third timestamp in each packet is a moment at which the third network node receives each packet through the second outbound interface. Correspondingly, when encapsulating the first timestamp of each packet into the in-situ flow detection information of each packet, the first network node may update the third timestamp in each packet to the first timestamp of each packet.

In a possible implementation, the first network node may determine, based on the third timestamp carried in each packet and the first timestamp of each packet, a link transmission delay of each packet between the third network node and the first network node. Further, the first network node determines, based on the link transmission delay of each packet between the third network node and the first network node, a link transmission delay of the first service flow between the third network node and the first network node in the first in-situ flow detection period. Because the link transmission delay of the first service flow between the third network node and the first network node in the first in-situ flow detection period is determined with reference to the plurality of packets, accuracy is relatively high.

In a possible implementation, after determining the link transmission delay of the first service flow between the third network node and the first network node in the first in-situ flow detection period, the first network node may send the determined link transmission delay to a controller, so that the controller analyzes the link transmission delay to determine performance of the detection domain.

In a possible implementation, the link transmission delay of the first service flow between the third network node and the first network node in the first in-situ flow detection period includes any one or more of a maximum link transmission delay of the first service flow between the third network node and the first network node in the first in-situ flow detection period, a minimum link transmission delay of the first service flow between the third network node and the first network node in the first in-situ flow detection period, and an average link transmission delay of the first service flow between the third network node and the first network node in the first in-situ flow detection period.

According to a second aspect, an embodiment of this application provides an in-situ flow detection method. The method may be performed by a first network node, and the first network node is a transit node or a tail node in a detection domain. The method may be used to determine an end-to-end transmission delay of a first service flow from a head node to the first network node in a first in-situ flow detection period. Specifically, a first network node in a detection domain performs the following operations on each of a plurality of packets in a first service flow that are received in a first in-situ flow detection period: The first network node receives each of the plurality of packets, where in-situ flow detection information of each of the plurality of packets carries a first timestamp, and the first timestamp of each packet indicates a moment at which a head node in the detection domain receives each packet; the first network node determines a second timestamp of each of the plurality of packets, where the second timestamp of each packet indicates a moment at which each packet is received through an outbound interface of the first network node; and the first network node determines, based on the first timestamp carried in each packet and the second timestamp of each packet, an end-to-end transmission delay of the first service flow from the head node to the first network node in the first in-situ flow detection period. In this embodiment of this application, when determining an end-to-end transmission delay of a first service flow from a head node to the first network node in a first in-situ flow detection period, the head node colors a plurality of packets, instead of one packet, in the first in-situ flow detection period. When only one packet is colored, if packet loss occurs on the colored packet, the transmission delay in the detection domain in the first in-situ flow detection period cannot be determined. However, in the manner of coloring a plurality of packets, even if packet loss occurs on one or more of the packets, the end-to-end transmission delay in the detection domain may be determined based on another packet on which no packet loss occurs. In addition, determining the end-to-end transmission delay based on a plurality of packets has higher precision than determining the end-to-end transmission delay based on one packet. In conclusion, using the solution provided in this embodiment of this application can improve precision of the detected end-to-end transmission delay of the first service flow from the head node to the first network node in the first in-situ flow detection period.

In a possible implementation, the in-situ flow detection is iFIT in-situ flow detection.

In a possible implementation, the in-situ flow detection information includes indication information, and the indication information indicates that the in-situ flow detection is end-to-end per-packet in-situ flow detection.

In a possible implementation, the plurality of packets include a first packet, the first packet includes first iFIT in-situ flow detection information, the first timestamp is located in a first flow instruction extension header FIEH in the first iFIT in-situ flow detection information, the iFIT in-situ flow detection information further includes indication information, and the indication information indicates that the in-situ flow detection is end-to-end per-packet in-situ flow detection.

In a possible implementation, the first network node determines, based on the first timestamp carried in each packet and the second timestamp of each packet, the end-to-end transmission delay of the first service flow from the head node to the first network node in the first in-situ flow detection period. During specific implementation, for example, the first network node may determine, based on the first timestamp carried in each packet and the second timestamp of each packet, an end-to-end transmission delay of each packet from the head node to the first network node, and then determine, based on the end-to-end transmission delay of each packet from the head node to the first network node, the end-to-end transmission delay of the first service flow from the head node to the first network node in the first in-situ flow detection period.

In a possible implementation, after determining the end-to-end transmission delay of the first service flow from the head node to the first network node in the first in-situ flow detection period, the first network node may send the determined end-to-end transmission delay to the controller, so that the controller analyzes the received transmission delay to determine performance of the detection domain.

In a possible implementation, it is considered that a maximum end-to-end transmission delay of the first service flow from the head node to the first network node in the first in-situ flow detection period, a minimum end-to-end transmission delay of the first service flow from the head node to the first network node in the first in-situ flow detection period, and an average end-to-end transmission delay of the first service flow from the head node to the first network node in the first in-situ flow detection period can all reflect the end-to-end transmission delay of the first service flow from the head node to the first network node in the first in-situ flow detection period. Therefore, the end-to-end transmission delay of the first service flow from the head node to the first network node in the first in-situ flow detection period may include any one or more of the maximum end-to-end transmission delay of the first service flow from the head node to the first network node in the first in-situ flow detection period, the minimum end-to-end transmission delay of the first service flow from the head node to the first network node in the first in-situ flow detection period, and the average end-to-end transmission delay of the first service flow from the head node to the first network node in the first in-situ flow detection period.

According to a third aspect, an embodiment of this application provides an in-situ flow detection method. The method may be performed by a controller. Specifically, the controller receives and stores a transmission delay that is of a first service flow in a detection domain in a first in-situ flow detection period and that is sent by a first network node, where the transmission delay of the first service flow in the detection domain includes any one or more of a maximum transmission delay, a minimum transmission delay, and an average transmission delay. The transmission delay may be calculated by using the method in the first aspect or the second aspect. For the first in-situ flow detection period, compared with calculating the transmission delay of the first service flow in the detection domain based on one packet, the transmission delay received by the controller is obtained through calculation based on a plurality of packets. Therefore, the transmission delay is more accurate. Correspondingly, when determining performance of the detection domain based on the received transmission delay, the controller can obtain a more accurate result. In addition, the controller directly receives the transmission delay from the first network node, instead of respectively receiving a corresponding timestamp from the first network node and the head node. For example, for the first packet, the controller does not need to receive, from the head node, a timestamp at which a first packet is received through an inbound interface of the head node, and does not need to receive, from the first network node, a timestamp at which the first packet is received through an outbound interface of the first network node. Therefore, the controller does not need to store a received timestamp, and the controller does not need to calculate a transmission delay based on the timestamp, so that less data is stored and processed by the controller.

In a possible implementation, the transmission delay of the first service flow in the detection domain includes an end-to-end transmission delay from a head node in the detection domain to the first network node.

In a possible implementation, the transmission delay of the first service flow in the detection domain includes a transmission delay of the first service flow in the first network node, where the first network node is a head node or a transit node in the detection domain.

In a possible implementation, the transmission delay of the first service flow in the detection domain includes a transmission delay of the first service flow between the first network node and a second network node, where the first network node is a transit node or a tail node in the detection domain, and the second network node is an upstream node of the first network node. In some embodiments, if there are several network nodes that do not support in-situ flow detection between the first network node and the second network node, the transmission delay of the first service flow between the first network node and the second network node includes a link delay of the first service flow between the first network node and the second network node, and transmission delays of the first service flow in the foregoing several network nodes that do not support in-situ flow detection.

In a possible implementation, the transmission delay of the first service flow in the detection domain includes a link transmission delay of the first service flow between the first network node and the second network node, where the second network node is an upstream node adjacent to the first network node.

According to a fourth aspect, this application further provides a first network node including a transceiver unit and a processing unit. The transceiver unit is configured to perform a receiving and sending operation in the method provided in the first aspect. The processing unit is configured to perform an operation other than the receiving and sending operation in the first aspect. For example, when the first network node is configured to perform the method according to any one of the first aspect or the possible implementations of the first aspect, the transceiver unit is configured to receive each of a plurality of packets through a first inbound interface, and the processing unit is configured to: encapsulate, into in-situ flow detection information of each received packet, a first timestamp at which each packet is received through the first inbound interface, and forward each packet encapsulated with the first timestamp to a first outbound interface. Alternatively, the transceiver unit is configured to perform a receiving and sending operation in the method provided in the second aspect. The processing unit is configured to perform an operation other than the receiving and sending operation in the second aspect. For example, when the first network node is configured to perform the method according to any one of the second aspect or the possible implementations of the second aspect, the transceiver unit is configured to receive each of the plurality of packets, where each of the plurality of packets carries a first timestamp, and the first timestamp of each packet indicates a moment at which a head node in the detection domain receives each packet; and the processing unit is configured to: determine a second timestamp of each of the plurality of packets, where the second timestamp of each packet indicates a moment at which each packet is received through an outbound interface of the first network node; and determine, based on the first timestamp carried in each packet and the second timestamp of each packet, an end-to-end transmission delay of the first service flow from the head node to the first network node in the first in-situ flow detection period.

According to a fifth aspect, an embodiment of this application provides a controller including a transceiver unit and a processing unit. The transceiver unit is configured to perform a receiving and sending operation in the method provided in the third aspect. The processing unit is configured to perform an operation other than the receiving and sending operation in the third aspect. For example, the transceiver unit is configured to receive a transmission delay that is of a first service flow in a detection domain in a first in-situ flow detection period and that is sent by a first network node, and the processing unit is configured to store the received transmission delay.

According to a sixth aspect, an embodiment of this application provides a first network node including a first inbound interface, a first outbound interface, and a processor connected to the first inbound interface and the first outbound interface. The first inbound interface is configured to perform an operation performed by the first inbound interface in the method according to any one of the implementations of the first aspect, and the first outbound interface is configured to perform an operation performed by the first outbound interface in the method according to any one of the implementations of the first aspect. The processor is configured to perform an operation other than the operations performed by the first inbound interface and the first outbound interface in the method according to the first aspect. Alternatively, the first inbound interface is configured to perform an operation of receiving a plurality of packets from an upstream network node in the method according to any one of the implementations of the second aspect, the first outbound interface is configured to perform an operation performed by an outbound interface of the first network node in the method according to any one of the implementations of the second aspect, and the processor is configured to perform an operation other than the operations performed by the first inbound interface and the first outbound interface in the method according to any one of the implementations of the second aspect.

According to a seventh aspect, an embodiment of this application provides a controller including a communication interface and a processor connected to the communication interface. The communication interface is configured to perform receiving and sending operations in the method according to any one of the implementations of the third aspect, and the processor is configured to perform an operation other than the operation performed by the communication interface in the method according to any one of the implementations of the third aspect.

According to an eighth aspect, an embodiment of this application provides a first network node. The first network node includes a memory and a processor. The memory is configured to store program code, and the processor is configured to run instructions in the program code, so that the first network node performs the method according to any one of the implementations of the first aspect or any one of the implementations of the second aspect.

According to a ninth aspect, an embodiment of this application provides a controller. The controller includes a memory and a processor. The memory is configured to store program code, and the processor is configured to run instructions in the program code, so that the controller performs the method according to any one of the implementations of the third aspect.

According to a tenth aspect, an embodiment of this application provides a computer-readable storage medium including instructions or a computer program. When the computer-readable storage medium runs on a computer, the computer is enabled to perform the method according to any one of the implementations of the first aspect, the method according to any one of the implementations of the second aspect, or the method according to any one of the implementations of the third aspect.

According to an eleventh aspect, an embodiment of this application provides a computer program product including instructions or a computer program. When the computer program product runs on a computer, the computer is enabled to perform the method according to any one of the implementations of the first aspect, the method according to any one of the implementations of the second aspect, or the method according to any one of the implementations of the third aspect.

According to a twelfth aspect, an embodiment of this application provides a communication system including a first network node and a controller. In an implementation, the first network node is the first network node according to any one of the implementations of the first aspect, or the first network node is the first network node according to any one of the implementations of the second aspect. In another implementation, the controller is the controller according to any one of the implementations of the third aspect.

### BRIEF DESCRIPTION OF DRAWINGS

To describe technical solutions in embodiments of this application or in a conventional technology more clearly, the following briefly describes the accompanying drawings for describing the embodiments or the conventional technology. It is clear that the accompanying drawings in the following descriptions show only some embodiments of this application, and a person of ordinary skill in the art may still derive other drawings from these accompanying drawings without creative efforts.
FIG. 1 is a schematic diagram of a structure of an MPLS packet to which iFIT information is added;
FIG. 2 is a schematic diagram of a network architecture according to an embodiment of this application;
FIG. 3A and FIG. 3B are a signaling exchange diagram of an in-situ flow detection method according to an embodiment of this application;
FIG. 4 is a schematic diagram of an FIEH field according to an embodiment of this application;
FIG. 5A and FIG. 5B are a signaling exchange diagram of an in-situ flow detection method according to an embodiment of this application;
FIG. 6 is a schematic flowchart of an in-situ flow detection method according to an embodiment of this application;
FIG. 7 is a schematic flowchart of an in-situ flow detection method according to an embodiment of this application;
FIG. 8 is a schematic flowchart of an in-situ flow detection method according to an embodiment of this application;
FIG. 9 is a schematic diagram of a structure of a first network node according to an embodiment of this application;
FIG. 10 is a schematic diagram of a structure of a controller according to an embodiment of this application;
FIG. 11 is a schematic diagram of a structure of a first network node according to an embodiment of this application;
FIG. 12 is a schematic diagram of a structure of a controller according to an embodiment of this application;
FIG. 13 is a schematic diagram of a structure of a first network node according to an embodiment of this application; and
FIG. 14 is a schematic diagram of a structure of a controller according to an embodiment of this application.

### DESCRIPTION OF EMBODIMENTS

Embodiments of this application provide an in-situ flow detection method and apparatus. According to solutions provided in embodiments of this application, precision of a detected transmission delay in a detection domain can be improved.

To facilitate understanding, an iFIT technology is used as an example to briefly describe the in-situ flow detection technology.

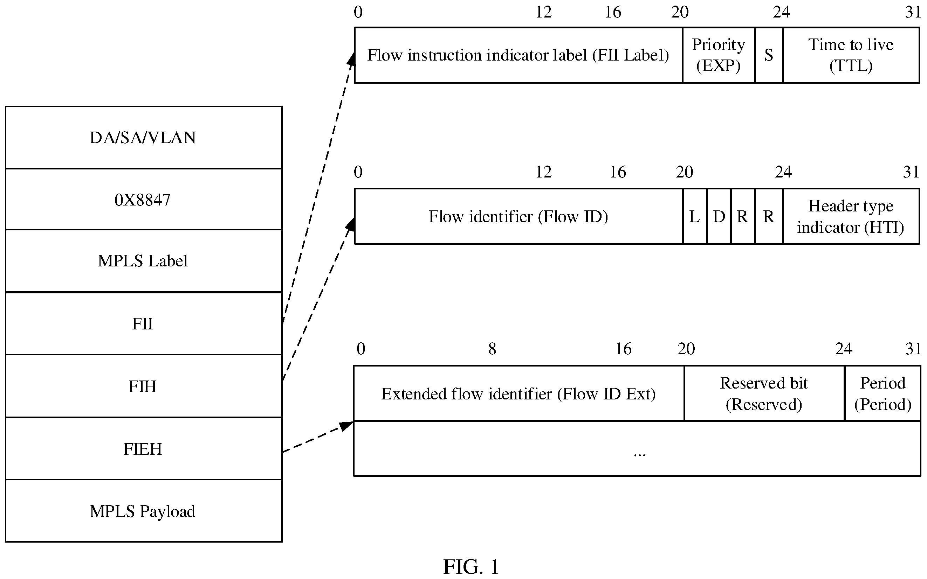

The iFIT technology may mark a service flow in a network based on iFIT information carried in packets. The marking is also referred to as coloring. The iFIT information may be used as a whole to form an iFIT header, for example, may be used as an extension header of a multi-protocol label switching (Multi-Protocol Label Switching, MPLS) protocol or the like. Alternatively, the iFIT information may be distributedly included in an internet protocol (Internet Protocol, IP) header based on field information or the like. A node through which the service flow passes reports collected data such as timestamps and quantities of packets to a control management device, so that the control management device further calculates a network delay, a packet loss status, a restoration path, and the like based on the reported data. In an MPLS network environment, a possible structure of an MPLS packet to which iFIT information is added is shown in FIG. 1. Herein, key fields shown in the MPLS packet are described.

DA/SA/VLAN and 0x8847 form a layer 2 header (layer 2 header, L2 header). DA indicates a destination address (destination address, DA), SA indicates a source address (source address, SA), and VLAN indicates a virtual local area network (Virtual Local Area Network, VLAN) identifier. MPLS Label indicates an MPLS label field, and the field is related to a service carried on an SR-TP tunnel. If the SR-TP tunnel carries a layer 3 virtual private network (layer 3 virtual private network, L3VPN) service, the MPLS Label field may include a plurality of levels of label stacks and a path label. Details are not described herein. MPLS Payload indicates a payload field.

A flow instruction indicator (flow instruction indicator, FII) field, a flow instruction header (flow instruction header, FIH) field, and a flow instruction extension header (flow instruction extension header, FIEH) field shown in FIG. 1 form the iFIT information. The following briefly describes the FII field, the FIH field, and the FIEH field.
1. The FII field is mainly used to identify that several bytes following the FII field are the iFIT information. For example, the FII field may include the following field information:
   a flow instruction indicator label (English: FII Label), where a default value may be configured to identify an iFIT detection flow;
   a priority EXP flag bit, where the priority EXP flag bit may be determined based on some related information in an outer MPLS label header;
   an S flag bit, used to mark whether it is a stack bottom, where, for example, a value of 1 indicates a stack bottom, and a value of 0 indicates a non-stack bottom; and
   a time to live (time to live, TTL) flag bit, where the TTL flag bit may also be determined based on some related information in the outer MPLS label header.
2. The FIH field may also be referred to as an in-situ flow detection header or a flow detection header. This field is mainly used to carry information related to iFIT detection. For example, the FIH field may include the following field information:
   a flow identifier (English: Flow ID), which is a globally unique identifier allocated to each piece of iFIT detection traffic;
   an L flag bit, namely, a packet loss (English: packet loss) detection color flag, where, for example, a value " 1" of the L flag bit indicates that packet loss is collected, and a value "0" of the L flag bit indicates that packet loss is not collected;
   a D flag bit, namely, a delay (English: delay) measurement color flag, where, for example, a value "1" of the D flag bit indicates that a timestamp is collected, and a value "0" of the D flag bit indicates that the timestamp is not collected;
   a header type indicator (header type indicator, HTI), which marks a range of nodes that need to send an iFIT detection result and a detection content range, where, for example, different mark values may be used to distinguish whether to detect a path node capable of iFIT other than two end nodes, whether the FIEH field is valid, and the like; and
   an R flag bit, which may be used as a reserved flag bit.
3. The FIEH field may also be referred to as a flow extension detection header or an extension in-situ flow detection header. As an extension field, this field is mainly used to carry other information related to iFIT detection. For example, the FIEH field may include the following field information:
   a flow identifier extension Flow ID Ext, used to extend a bit width of a flow identifier;
   a V flag bit, used to mark a reverse flow (English: reverse flow), where for example, a value "0" of the V flag bit indicates that a current flow is a forward flow, and a receive end may automatically create a reverse flow; and a value "1" of the V flag bit indicates that a current flow is a reverse flow, and the receive end no longer automatically creates a reverse flow, where the V flag bit is an optional field, which is not shown in FIG. 1; and
   a period (English: Period), where different values indicate different detection periods, and for example, the detection period may be Is, 10s, 30s, 1 min, or 10 min.

It should be noted that, the foregoing only briefly describes a principle of an in-situ flow detection technology by using the iFIT technology as an example. The in-situ flow detection technology is not limited to the iFIT technology mentioned above. Other in-situ flow detection technologies are not described in detail herein.

Generally, after receiving a packet sent by another device, a head node in a detection domain encapsulates in-situ flow detection information (for example, iFIT information) into the packet, to indicate a network node in the detection domain for in-situ flow detection. A type of the packet is generally a service packet. In an actual application scenario, a plurality of service packets may be sent consecutively. For example, the plurality of service packets may form a service flow, or the plurality of service packets are sent at intervals in a specific period. This is not limited herein.

In a network, a network range for in-situ flow detection may be determined based on a specified detection domain. Generally, a network node in the detection domain needs to transmit in-situ flow detection information for in-situ flow detection, and sends, to a control management device, corresponding information obtained through in-situ flow detection. A detection range of the detection domain may be determined in a plurality of manners, for example, based on network scenarios or service types. For example, a core network part in a network is specified as the detection domain, or detection domains of different ranges are specified based on video services and voice services. A detection domain includes three types of nodes: a head node (English: head node), a tail node (English: end node), and a hop-by-hop path node (English: path node). The hop-by-hop path node may also be referred to as a transit node. The head node, tail node, and path node may be, for example, corresponding network nodes in a network. For a service flow, the 1^{st} network node that transmits the service flow within a specified detection range in the detection domain may be used as a head node that transmits the service flow. The last network node that transmits the service flow within the specified detection range in the detection domain may be used as a tail node that transmits the service flow. Each node that transmits the service flow between the head node and the tail node is a hop-by-hop path node. The in-situ flow detection information may be added by the head node and stripped at the tail node.

The detection domain in this application is a network domain in which in-situ flow detection is applied. Specifically, the detection domain includes a plurality of forwarding devices capable of in-situ flow detection, for example, routers or switches. The detection domain may further include a control management device, for example, a logically centralized controller, configured to: configure in-situ flow detection for the plurality of forwarding devices in the detection domain, and collect and analyze in-situ flow detection data reported by the plurality of forwarding devices.

It should be noted that FIG. 1 is merely an example for description, and the in-situ flow detection technology may be applied to various other network environments. For example, in an Internet Protocol version 4 (Internet Protocol version 4, IPv4) network environment, the in-situ flow detection information may be encapsulated in a field of an IPv4 packet. For another example, in an Internet Protocol version 6 (Internet Protocol version 6, IPv6) network environment, the in-situ flow detection information may be encapsulated in a field of an IPv6 packet. For another example, in a segment routing IPv6 (segment routing IPv6, SRv6) network environment, the iFIT information may be encapsulated in a field of an SRv6 packet.

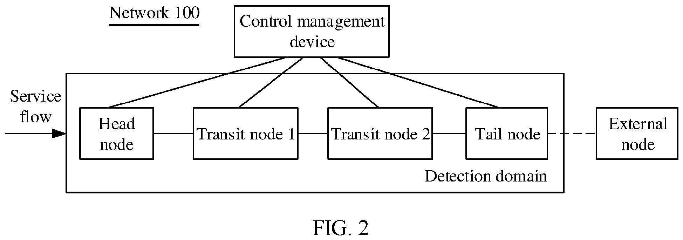

The following describes a possible network architecture in embodiments of this application. FIG. 2 is a schematic diagram of a network architecture according to an embodiment of this application. A network 100 includes a control management device and a plurality of network nodes. The plurality of network nodes are connected to each other through communication links, for transmission of service flows. As shown in FIG. 2, a head node, a transit node 1, a transit node 2, and a tail node in the detection domain are connected through communication links. In addition to the nodes shown in the figure, the detection domain may further include other nodes that are not shown. The tail node may be further connected to an external node through a communication link. The head node may receive a service flow from another device, and the service flow may reach the external node through the head node, the transit node 1, the transit node 2, and the tail node. The control management device may be, for example, a centralized controller, a network management system, or a traffic analysis device for traffic analysis. The control management device may be one device, or may be a set of a plurality of devices.

In this application, the detection domain may be determined by the control management device, and the detection domain is a detection range determined by the control management device; or the detection domain may be separately configured on each forwarding device in the detection domain, to form a detection domain. On a transmission path in the detection domain, network nodes located between the head node and the tail node in the detection domain are transit nodes, for example, the transit node 1 and the transit node 2 in FIG. 2.

Currently, the control management device may deploy the in-situ flow detection technology on each node in the detection domain, to detect a transmission delay in the detection domain. The transmission delay in the detection domain may include an end-to-end transmission delay between the head node and the tail node. Each node in the detection domain may periodically perform a delay detection operation. With reference to FIG. 2, the following describes a conventional implementation of detecting the end-to-end transmission delay between the head node and the tail node. Specifically, in an in-situ flow detection period, the head node may randomly select a packet from received packets for coloring. Specifically, the head node may add in-situ flow detection information indicating detection of a transmission delay to the packet, and report, to the control management device, a timestamp indicating a moment at which the head node receives the packet. After receiving the packet, the tail node in the detection domain may forward the packet to an external node, and reports, to the control management device, a timestamp indicating a moment at which the tail node forwards the packet to the external node. The control management device may calculate the end-to-end transmission delay in the detection domain in the in-situ flow detection period based on the timestamp reported by the head node and the timestamp reported by the tail node. Specifically, the control management device may determine a difference between the timestamp reported by the tail node and the timestamp reported by the head node as the end-to-end transmission delay in the detection domain in the in-situ flow detection period.

Because packet loss may occur when the colored packet is transmitted in the detection domain, if packet loss occurs, the control management device cannot receive the timestamp sent by the tail node, the control management device cannot determine the end-to-end transmission delay in the detection domain in the in-situ flow detection period. In addition, an end-to-end transmission delay of a single packet in the detection domain cannot well represent the end-to-end transmission delay in the detection domain. Therefore, an end-to-end transmission delay obtained in the foregoing manner of detecting the end-to-end transmission delay in the detection domain is inaccurate.

To resolve the foregoing problem, an embodiment of this application provides an in-situ flow detection method. With reference to the accompanying drawings, the following describes delay detection performed by using the in-situ flow detection method.

In the following descriptions of this embodiment of this application, for ease of understanding, the iFIT in-situ flow detection is used as an example for description, but this does not constitute any limitation on this embodiment of this application. The in-situ flow detection in this application includes but is not limited to the iFIT in-situ flow detection.

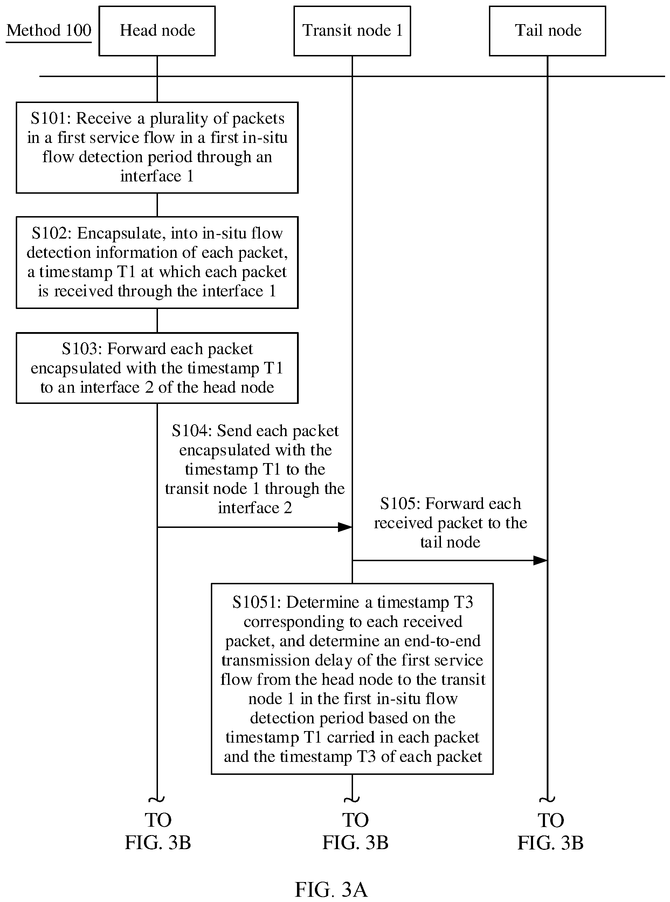

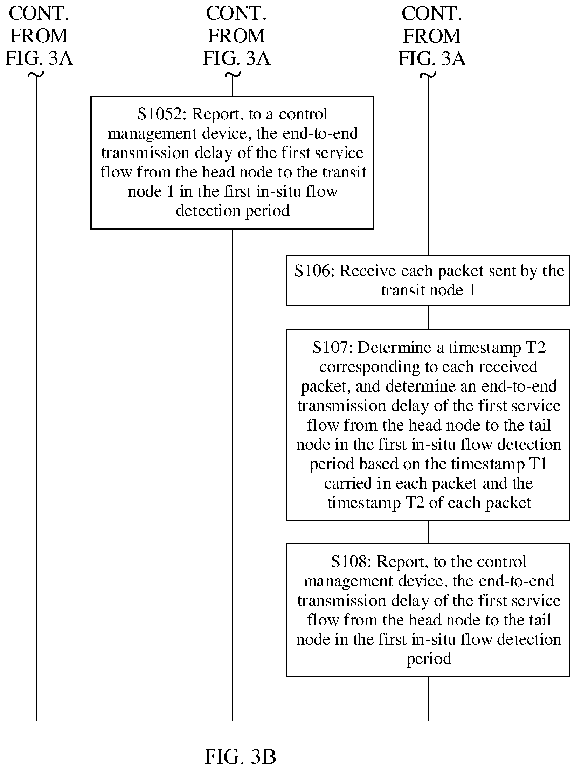

FIG. 3A and FIG. 3B are a signaling exchange diagram of the in-situ flow detection method according to an embodiment of this application. The method shown in FIG. 3A and FIG. 3B may be used to detect an end-to-end transmission delay of a first service flow in a detection domain in a first in-situ flow detection period. The method 100 shown in FIG. 3A and FIG. 3B may be implemented by using the following S101 to S109.

S101: A head node receives a plurality of packets in the first service flow in the first in-situ flow detection period through an interface 1.

In this embodiment of this application, the interface 1 is an interface through which the head node interacts with another device, and the interface 1 may be a physical interface on the head node. Generally, for a detection domain to which an iFIT technology is applied for delay detection, each node may periodically perform a delay detection operation. The first in-situ flow detection period is one of a plurality of periods for the delay detection operation. For the first in-situ flow detection period, an example is used herein for description. It is assumed that an in-situ flow detection period is T, and a moment at which the iFIT technology is deployed in the detection domain is to. In this case, a time period corresponding to the 1^{st} in-situ flow detection period is (to, t₀+T), a time period corresponding to the 2^{nd} in-situ flow detection period is (t₀+T, t₀+2^{∗}T), and by analogy, and a time period corresponding to the n^{th} in-situ flow detection period is (t₀+(n-1)^{∗}T, t₀+n^{∗}T). The first in-situ flow detection period mentioned in this embodiment of this application may be an in-situ flow detection period corresponding to a time period (t₀+(i-1)^{∗}T, t₀+i^{∗}T), where i is an integer greater than or equal to 1.

In this embodiment of this application, the transmission delay in the detection domain is detected by coloring the first service flow. For a non-service flow, for example, a control packet or another protocol packet is not used for detection of the transmission delay in the detection domain. The plurality of packets may be all packets in the first service flow, or may be some packets in the first service flow. The plurality of packets may be packets consecutively received by the head node through the interface 1, or may be packets received at intervals. This is not limited herein.

S102: The head node encapsulates, into in-situ flow detection information of each packet, a timestamp T1 at which each packet is received through the interface 1.

For each of the plurality of packets, each time the head node receives a packet, the head node determines a timestamp T1 of the packet, where the timestamp T1 of the packet indicates a moment at which the head node receives the packet through the interface 1, and the head node encapsulates the timestamp T1 into in-situ flow detection information of the received packet. A packet 1 in the plurality of packets is used as an example. When receiving the packet 1 through the interface 1, the head node obtains a local timestamp of the head node, to obtain a timestamp T1 of the packet 1. After obtaining the timestamp T1 of the packet 1, the head node encapsulates the timestamp T1 of the packet 1 into in-situ flow detection information of the packet 1.

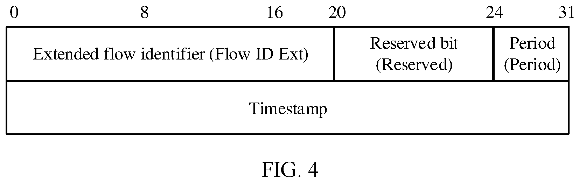

In this embodiment of this application, a field of the in-situ flow detection information may be extended to carry a timestamp field. The following uses iFIT as an example for introduction. An FIEH field of an iFIT header may be extended by adding the timestamp field 1, where the timestamp T1 is carried in the added timestamp field 1. The extended FIEH field may be understood with reference to FIG. 4. FIG. 4 is a schematic diagram of the FIEH field according to an embodiment of this application. The Timestamp field shown in FIG. 4 is the extended timestamp field 1.

In this embodiment of this application, a length of the added timestamp field 1 may be determined based on precision of the timestamp T1. For example, if the timestamp T1 is at nanosecond precision, the timestamp field 1 may include, for example, 8 bytes. Certainly, the timestamp field 1 may be further divided into a plurality of subfields. In an example, the timestamp field 1 includes a first subfield and a second subfield. The first subfield and the second subfield jointly carry the timestamp T1. For example, when a moment indicated by the timestamp T1 is 5 minutes 5 seconds 100 nanoseconds, the first subfield carries a second-level timestamp indicating that the time is 5 minutes 5 seconds, and the second subfield carries a nanosecond-level timestamp indicating 100 nanoseconds.

In an implementation of this embodiment of this application, the in-situ flow detection information of each packet further includes indication information 1, and the indication information 1 indicates that in-situ flow detection is end-to-end per-packet in-situ flow detection. The iFIT is used as an example. Specifically, the indication information 1 may be carried using an HTI field of the iFIT in-situ flow detection information. In this embodiment of this application, a meaning of the HTI field is extended. Specifically, the HTI field includes 8 bits, and a value of the HTI field may range from 0 to 255. In an implementation of this embodiment of this application, for example, a meaning of a value being 5 of the HTI field may be defined. Specifically, when the value of the HTI field is 5, it indicates that the in-situ flow detection information includes indication information indicating that the in-situ flow detection is the end-to-end per-packet in-situ flow detection. "End-to-end" means that the tail node performs a step of detecting an end-to-end transmission delay from the head node to the tail node. "Per-packet" means that the head node colors a plurality of packets in the first service flow. Correspondingly, the end-to-end transmission delay from the head node to the tail node that is calculated by the tail node is obtained through calculation based on the plurality of colored packets.

S103: The head node forwards each packet encapsulated with the timestamp T1 to an interface 2 of the head node.

In this embodiment of this application, the head node may determine, based on a destination IP address in the packet and a local packet forwarding table, an outbound interface for forwarding the packet. The interface 2 mentioned herein is the outbound interface for forwarding each packet. The interface 2 may be a physical interface on the head node.

S104: The head node sends, through the interface 2, each packet encapsulated with the timestamp T1 to a transit node 1.

S105: The transit node 1 forwards each received packet to the tail node.

S106: The tail node receives each packet sent by the transit node 1.

After the tail node receives each packet that carries the timestamp T1, because each packet carries the indication information 1, the tail node determines an end-to-end transmission delay of the first service flow from the head node to the tail node in the first in-situ flow detection period based on the plurality of packets that carry the timestamp T1. Specifically, the tail node may determine the end-to-end transmission delay of the first service flow from the head node to the tail node in the first in-situ flow detection period by performing S107.

S107: The tail node determines a timestamp T2 corresponding to each received packet, and determines an end-to-end transmission delay of the first service flow from the head node to the tail node in the first in-situ flow detection period based on the timestamp T1 carried in each packet and the timestamp T2 of each packet.

Each time the tail node receives a packet that carries a timestamp T1, the tail node may determine a timestamp T2 of the packet. The timestamp T2 indicates a moment at which the packet is received through an outbound interface of the tail node. The packet 1 is used as an example. After receiving the packet 1, the tail node may determine the timestamp T2 at which the packet 1 is received through the outbound interface of the tail node. After determining the timestamp T2 corresponding to each packet, the tail node may calculate the end-to-end transmission delay of the first service flow from the head node to the tail node in the first in-situ flow detection period based on the timestamp T1 carried in each packet and the timestamp T2 of each packet. Specifically, the tail node may calculate an end-to-end transmission delay of each packet from the head node to the tail node based on the timestamp T1 of each packet and the timestamp T2 of each packet. The packet 1 is used as an example. The tail node may calculate a difference between the timestamp T2 of the packet 1 and the timestamp T1 of the packet 1, to obtain the end-to-end transmission delay of the packet 1 from the head node to the tail node. After calculating the end-to-end transmission delay of each packet from the head node to the tail node, the tail node may determine the end-to-end transmission delay of the first service flow from the head node to the first network node in the first in-situ flow detection period based on the end-to-end transmission delay of each packet from the head node to the tail node.

For the end-to-end transmission delay of the first service flow from the head node to the first network node in the first in-situ flow detection period, it should be noted that in this embodiment of this application, a maximum value of the end-to-end transmission delays of the packets from the head node to the tail node, a minimum value of the end-to-end transmission delays of the packets from the head node to the tail node, and an average value of the end-to-end transmission delays of the packets from the head node to the tail node are considered, and may all reflect the end-to-end transmission delay of the first service flow from the head node to the first network node in the first in-situ flow detection period. Therefore, in this embodiment of this application, the end-to-end transmission delay of the first service flow from the head node to the first network node in the first in-situ flow detection period may be any one or more of the maximum end-to-end transmission delay of the packets from the head node to the tail node, the minimum end-to-end transmission delay of the packets from the head node to the tail node, and the average end-to-end transmission delay of the packets from the head node to the tail node. In other words, after determining the end-to-end transmission delay of each packet from the head node to the tail node, the tail node may determine one or more of the maximum value of the end-to-end transmission delays of the packets from the head node to the tail node, the minimum value of the end-to-end transmission delays of the packets from the head node to the tail node, and the average value of the end-to-end transmission delays of the packets from the head node to the tail node as the end-to-end transmission delay of the first service flow from the head node to the first network node in the first in-situ flow detection period. The maximum value of the end-to-end transmission delays of the packets from the head node to the tail node may also be referred to as a maximum end-to-end transmission delay of the packets from the head node to the tail node. The minimum value of the end-to-end transmission delays of the packets from the head node to the tail node may also be referred to as a minimum end-to-end transmission delay of the packets from the head node to the tail node. The average value of the end-to-end transmission delays of the packets from the head node to the tail node may also be referred to as an average end-to-end transmission delay of the packets from the head node to the tail node.

S108: The tail node reports the end-to-end transmission delay of the first service flow from the head node to the tail node in the first in-situ flow detection period to the control management device.

After determining the end-to-end transmission delay of the first service flow from the head node to the tail node in the first in-situ flow detection period, the tail node may report the end-to-end transmission delay to the control management device, so that the control management device performs analysis and processing based on the received data. In an example, the tail node may encapsulate the end-to-end transmission delay of the first service flow from the head node to the tail node in the first in-situ flow detection period into a YANG model, and report the end-to-end transmission delay to the control management device using a representational state transfer configuration protocol (Representational State Transfer Configuration Protocol, RESTCONF). Alternatively, the tail node may report the end-to-end transmission delay of the first service flow from the head node to the tail node in the first in-situ flow detection period to the control management device using a telemetry (telemetry) technology.

It should be noted that, in this embodiment of this application, when sending data to the control management device, a node in the detection domain may encapsulate the to-be-sent data into a YANG model, and report the data to the control management device using the RESTCONF, or report the to-be-sent data to the control management device using telemetry. Therefore, for reporting data by a node in the detection domain to the control management device, details are not described.

In an embodiment, in addition to indicating the tail node to determine the end-to-end transmission delay of the first service flow from the head node to the tail node in the first in-situ flow detection period, the indication information 1 may further indicate the transit node 1 to determine an end-to-end transmission delay of the first service flow from the head node to the transit node 1 in the first in-situ flow detection period. In other words, the foregoing "end-to-end" may also mean that the transit node 1 performs a step of detecting the end-to-end transmission delay from the head node to the transit node 1. Specifically, in addition to S105, the transit node 1 may further perform S1051 and S1052.

S1051: The transit node 1 determines a timestamp T3 corresponding to each received packet, and determines the end-to-end transmission delay of the first service flow from the head node to the transit node 1 in the first in-situ flow detection period based on the timestamp T1 carried in each packet and the timestamp T3 of each packet.

The timestamp T3 of each packet indicates a moment at which each packet is received through an outbound interface of the transit node 1.

S1052: The transit node 1 reports the end-to-end transmission delay of the first service flow from the head node to the transit node 1 in the first in-situ flow detection period to the control management device.

An implementation principle of S1051 and S1052 is similar to that of S107 and S108. Therefore, for specific implementation of S1051 and S1052, refer to the foregoing description part of S107 and S108. Details are not described herein.

It should be noted that, in the method shown in FIG. 3 A and FIG. 3B, although only one transit node is shown, in an actual application, the first service flow may pass through several transit nodes supporting the iFIT technology for transmission of the first service flow in the detection domain. Operations performed by the transit nodes are similar. To be specific, the transit node receives a packet from an upstream device and forwards the packet to a downstream device. Steps of calculating the end-to-end transmission delay performed by the transit nodes are the same as steps performed by the transit node 1. Details are not described herein.

It can be learned from the foregoing descriptions that, in this embodiment of this application, the head node detects the end-to-end transmission delay by coloring a plurality of packets of the first service flow. Even if one or more colored packets are lost, the end-to-end transmission delay in the detection domain in the first in-situ flow detection period can still be determined based on another packet that is not lost. In addition, the manner of determining the end-to-end transmission delay in the detection domain in the first in-situ flow detection period based on a plurality of packets has higher precision than a manner of determining the end-to-end transmission delay in the detection domain in the first in-situ flow detection period based on one packet. In conclusion, using the solution provided in this embodiment of this application can improve the precision of the detected end-to-end transmission delay in the detection domain.

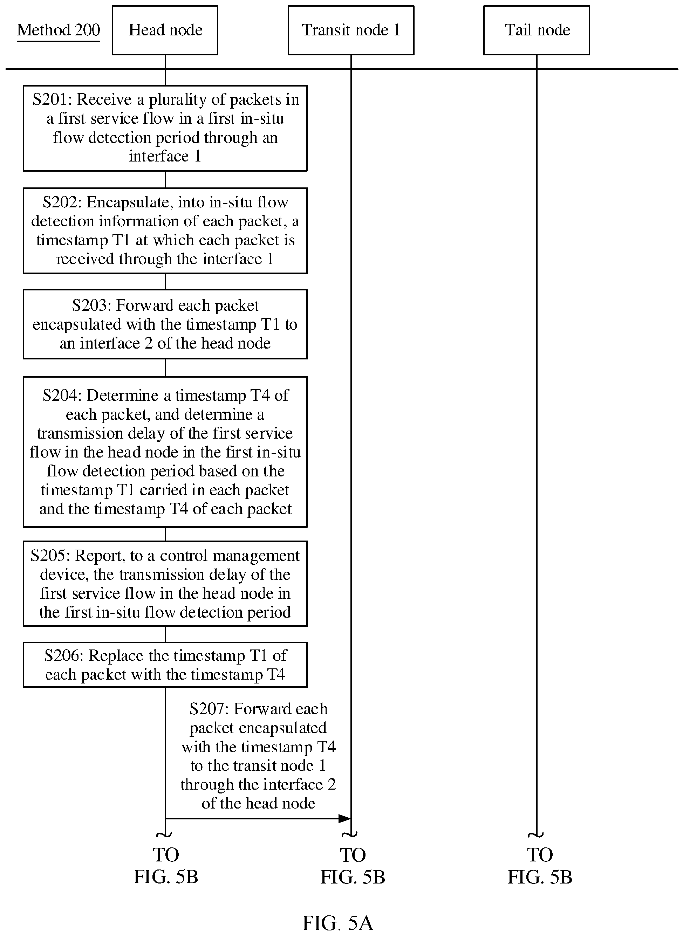

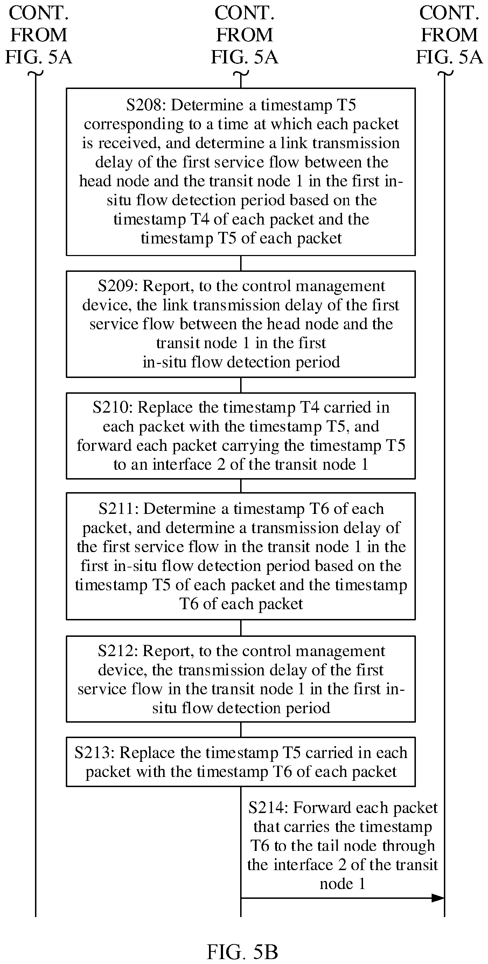

In addition, to more accurately reflect transmission performance of a detection domain, an embodiment of this application further provides an in-situ flow detection method. The method may be used to detect a transmission delay of a first service flow between nodes in a detection domain and a transmission delay of the first service flow in a node in a first in-situ flow detection period. The following describes the in-situ flow detection method with reference to FIG. 5A and FIG. 5B. FIG. 5A and FIG. 5B are a signaling exchange diagram of the in-situ flow detection method according to an embodiment of this application. For example, the method 200 shown in FIG. 5A and FIG. 5B may be implemented by performing S201 to S214.

S201: A head node receives a plurality of packets in the first service flow in the first in-situ flow detection period through an interface 1.

S202: The head node encapsulates, into in-situ flow detection information of each packet, a timestamp T1 at which each packet is received through the interface 1.

S203: The head node forwards each packet encapsulated with the timestamp T1 to an interface 2 of the head node.

A basic principle of S201 to S203 is the same as that of S101 to S103. Therefore, for specific implementation of S201 to S203, refer to the foregoing description part of S101 to S103. Details are not described herein again.

It should be noted that a difference between S201 to S203 and S101 to S103 lies in that the in-situ flow detection information of each packet mentioned in S201 to S203 includes indication information 2, and the indication information 2 indicates that the in-situ flow detection is hop-by-hop per-packet in-situ flow detection. Similar to the indication information 1, the indication information 2 may also be carried by using an HTI field in the in-situ flow detection information, and a meaning of the HTI field may be extended. For example, a meaning of a value 6 of the HTI field may be defined. When the value of the HTI field is 6, it indicates that the in-situ flow detection information includes indication information indicating that the in-situ flow detection is hop-by-hop per-packet in-situ flow detection. "Hop-by-hop" means that each node that supports an iFIT technology and that receives the colored packet needs to perform detection of a link delay and a transmission delay in the node. The meaning of "per-packet" is mentioned above, and details are not described herein again.

S204: The head node determines a timestamp T4 of each packet, and determines a transmission delay of the first service flow in the head node in the first in-situ flow detection period based on the timestamp T1 carried in each packet and the timestamp T4 of each packet.

In this embodiment of this application, the timestamp T4 of each packet indicates a moment at which each packet is received through the interface 2 of the head node.

It may be understood that, because the indication information 2 indicates that the in-situ flow detection is hop-by-hop per-packet in-situ flow detection, the head node needs to calculate the transmission delay of the first service flow in the head node. Specifically, when receiving one of the plurality of packets, the head node may determine a timestamp T4 corresponding to the packet, and determine a transmission delay of the first service flow in the head node in the first in-situ flow detection period based on the timestamp T1 carried in each packet and the timestamp T4 of each packet. Specifically, the head node may calculate the transmission delay of the packet in the head node based on the timestamp T1 carried in each packet and the timestamp T4 of each packet. The packet 1 is used as an example. The head node may determine a difference between a timestamp T4 and a timestamp T1 of the packet 1 as a transmission delay of the packet 1 in the head node. Further, after calculating the transmission delay of each packet in the head node, the head node determines the transmission delay of the first service flow in the head node in the first in-situ flow detection period based on the transmission delay of each packet in the head node.

Specifically, a maximum value of the transmission delays of the packets in the head node, a minimum value of the transmission delays of packets in the head node, and an average value of the transmission delays of packets in the head node may all reflect the transmission delay of the first service flow in the head node in the first in-situ flow detection period. Therefore, in this embodiment of this application, the head node may determine any one or more of the maximum value of the transmission delays of packets in the head node, the minimum value of the transmission delays of packets in the head node, and the average value of the transmission delays of packets in the head node as the transmission delay of the first service flow in the head node in the first in-situ flow detection period. The maximum value of the transmission delays of the packets in the head node may also be referred to as a maximum transmission delay of the packets in the head node; the minimum value of the transmission delays of the packets in the head node may also be referred to as a minimum transmission delay of the packets in the head node; and the average value of the transmission delays of packets in the head node may also be referred to as an average transmission delay of the packets in the head node.

S205: The head node reports the transmission delay of internal transmission of the first service flow in the head node in the first in-situ flow detection period to the control management device.

After determining the transmission delay of internal transmission of the first service flow in the head node in the first in-situ flow detection period, the head node may report the transmission delay of internal transmission of the first service flow in the head node in the first in-situ flow detection period to the control management device, so that the control management device performs analysis and processing based on the received data.

S206: The head node replaces the timestamp T1 of each packet with the timestamp T4.

In this embodiment of this application, to enable the transit node 1 receiving each packet to determine a transmission delay of the first service flow between the head node and the transit node 1 in the first in-situ flow detection period, the head node may replace the timestamp T1 carried in each packet with a corresponding timestamp T4, that is, replace the timestamp T1 in the packet 1 with the timestamp T4 of the packet 1, and replace a timestamp T1 in a packet 2 with a timestamp T4 of the packet 2.

S207: The head node forwards each packet encapsulated with the timestamp T4 to the transit node 1 through the interface 2 of the head node.

S208: The transit node 1 determines a timestamp T5 corresponding to a moment at which each packet is received, and determines a transmission delay of the first service flow from the head node to the transit node 1 in the first in-situ flow detection period based on the timestamp T4 of each packet and the timestamp T5 of each packet.

After receiving each packet encapsulated with the timestamp T4, the transit node 1 may determine the transmission delay of the first service flow between the head node and the transit node 1 in the first in-situ flow detection period based on the timestamp T4 carried in each of the plurality of packets. Specifically, the transit node 1 may determine the timestamp T5 corresponding to the time at which each packet is received. The timestamp T5 indicates a moment at which the packet is received from the head node through the interface 1 of the transit node. Then, the transit node 1 calculates a transmission delay of each packet between the head node and the transit node 1 based on the timestamp T4 of each packet and the timestamp T5 of each packet. The packet 1 is used as an example. The transit node 1 may determine a difference between the timestamp T5 and the timestamp T4 of the packet 1 as a transmission delay of the packet 1 between the head node and the transit node 1. Further, the transit node 1 may determine a transmission delay of the first service flow between the head node and the transit node 1 in the first in-situ flow detection period based on a transmission delay of each packet between the head node and the transit node 1. The interface 1 of the transit node 1 mentioned above may be a physical interface on the transit node 1.

It is considered that a maximum value of the transmission delays of the packets between the head node and the transit node 1, a minimum value of the transmission delays of the packets between the head node and the transit node 1, and an average value of the link delays of the packets between the head node and the transit node 1 may all reflect, to some extent, the transmission delay of the first service flow between the head node and the transit node 1 in the first in-situ flow detection period. Therefore, the transit node 1 may determine any one or more of the maximum value of the transmission delays of packets between the head node and the transit node 1, the minimum value of the transmission delays of packets between the head node and the transit node 1, and the average value of the transmission delays of packets between the head node and the transit node 1 as the transmission delay of the first service flow between the head node and the transit node 1 in the first in-situ flow detection period.

S209: The transit node 1 reports the transmission delay of the first service flow between the head node and the transit node 1 in the first in-situ flow detection period to the control management device.

After determining the transmission delay of the first service flow between the head node and the transit node 1 in the first in-situ flow detection period, the transit node 1 may report the determined link transmission delay to the control management device, so that the control management device performs analysis and processing based on the received data.

It should be noted that, in this embodiment of this application, the head node may be an upstream node adjacent to the transit node 1, in other words, the transit node 1 is a next-hop node of the head node. However, in an actual application, the head node may not be the upstream node adjacent to the transit node 1. That is, when the head node forwards the plurality of packets to the transit node 1, the plurality of packets pass through a plurality of other nodes that do not support the iFIT technology. It may be understood that, if the head node is the upstream node adjacent to the transit node, the transmission delay of the first service flow between the head node and the transit node 1 in the first in-situ flow detection period is a link transmission delay of the first service flow between the head node and the transit node 1 in the first in-situ flow detection period. In other words, if the head node is the upstream node adjacent to the transit node, delay performance of a direct link between the head node and the transit node 1 can be detected by using the solution in this embodiment of this application.

S210: The transit node 1 replaces the timestamp T4 carried in each packet with the timestamp T5, and forwards each packet that carries the timestamp T5 to an interface 2 of the transit node 1.

In this embodiment of this application, to enable the transit node 1 receiving each packet to determine a transmission delay of the first service flow in the transit node 1 in the first in-situ flow detection period, the transit node 1 may replace the timestamp T4 carried in each packet with a corresponding timestamp T5, that is, replace the timestamp T4 in the packet 1 with the timestamp T5 of the packet 1, and replace a timestamp T4 in a packet 2 with a timestamp T5 of the packet 2.

The interface 2 of the transit node 1 mentioned herein is an interface configured to forward each packet to a downstream device. The interface 2 may be a physical interface in the transit node 1.

S211: The transit node 1 determines a timestamp T6 of each packet, and determines a transmission delay of the first service flow in the transit node 1 in the first in-situ flow detection period based on the timestamp T5 of each packet and the timestamp T6 of each packet.

In this embodiment of this application, the timestamp T6 of each packet indicates a moment at which each packet is received through the interface 2 of the transit node 1.

It should be noted that a principle of S211 is the same as a principle of S204 in which the head node determines the transmission delay of the first service flow in the head node in the first in-situ flow detection period. Specifically, after obtaining a plurality of packets that carry the timestamp T5, the interface 2 of the transit node 1 may determine the timestamp T6 of each packet, and determine the transmission delay of the first service flow in the transit node 1 in the first in-situ flow detection period based on the timestamp T5 of each packet and the timestamp T6 of each packet.

First, the transit node 1 may determine the transmission delay of each packet in the transit node 1 based on the timestamp T5 of each packet and the timestamp T6 of each packet. The packet 1 is used as an example. The transit node 1 may determine a difference between a timestamp T6 of the packet 1 and a timestamp T5 of the packet 1 as a transmission delay of the packet 1 in the transit node 1. Then, the transit node 1 determines a transmission delay of the first service flow in the transit node 1 in the first in-situ flow detection period based on the transmission delay of each packet in the transit node 1. Similar to determining, by the head node, the transmission delay of the first service flow in the head node in the first in-situ flow detection period, the transit node 1 may determine any one or more of a maximum transmission delay of the packets in the transit node 1, a minimum transmission delay of the packets in the transit node 1, and an average transmission delay of the packets in the transit node 1 as the transmission delay of the first service flow in the transit node 1 in the first in-situ flow detection period. The maximum transmission delay of the packets in the transit node 1 is a maximum value of the transmission delays of the packets in the transit node 1. The minimum transmission delay of packets in the transit node 1 is a minimum value of the transmission delays of the packets in the transit node 1. The average transmission delay of the packets in the transit node 1 is an average value of the transmission delays of the packets in the transit node 1.

S212: The transit node 1 reports the transmission delay of the first service flow in the transit node 1 in the first in-situ flow detection period to the control management device.

After determining the transmission delay of the first service flow in the transit node 1 in the first in-situ flow detection period, the transit node 1 may report the transmission delay to the control management device, so that the control management device performs analysis and processing based on the received data.

S213: The transit node 1 replaces the timestamp T5 carried in each packet with the timestamp T6 of each packet.

S214: The transit node 1 forwards each packet that carries the timestamp T6 to the tail node through the interface 2 of the transit node 1.

For S213 and S214, it should be noted that, to enable the tail node to calculate a transmission delay of the first service flow between the transit node 1 and the tail node in the first in-situ flow detection period, the transit node may replace the timestamp T5 carried in each packet with the timestamp T6 of each packet, and forward each packet that carries the timestamp T6 to the tail node through the interface 2 of the transit node 1.

After the transit node 1 sends each packet that carries the timestamp T6 to the tail node, the tail node may also calculate the transmission delay of the first service flow between the transit node 1 and the tail node in the first in-situ flow detection period based on the plurality of packets that carry the timestamp T6, and report the transmission delay to the control management device. Correspondingly, the tail node may further calculate a transmission delay of the first service flow in the tail node in the first in-situ flow detection period, and report the transmission delay of the first service flow in the tail node in the first in-situ flow detection period to the control management device. A calculation manner in which the tail node calculates the transmission delay of the first service flow between the transit node 1 and the tail node in the first in-situ flow detection period is similar to a specific implementation in which the transit node 1 calculates the transmission delay of the first service flow between the head node and the transit node 1 in the first in-situ flow detection period, and details are not described herein again. Correspondingly, a calculation manner in which the tail node calculates the transmission delay of the first service flow in the tail node in the first in-situ flow detection period is similar to a specific implementation in which the transit node 1 calculates the transmission delay of the first service flow in the transit node 1 in the first in-situ flow detection period, and details are not described herein again.

It should be noted that, in this embodiment of this application, the transit node 1 may be an upstream node adjacent to the tail node, in other words, the tail node is a next-hop node of the transit node 1. However, in an actual application, the transit node 1 may not be the upstream node adjacent to the tail node. That is, when the transit node 1 forwards the plurality of packets to the tail node, the plurality of packets pass through a plurality of other nodes that do not support the iFIT technology. It may be understood that, if the transit node 1 is the upstream node adjacent to the tail node, the transmission delay of the first service flow between the transit node 1 and the tail node in the first in-situ flow detection period is a link transmission delay of the first service flow between the transit node 1 and the tail node in the first in-situ flow detection period. In other words, if the transit node 1 is the upstream node adjacent to the tail node, delay performance of a direct link between the transit node 1 and the tail node can be detected by using the solution in this embodiment of this application.

In this embodiment of this application, a node that supports iFIT detection in the detection domain may be further configured to perform end-to-end per-packet in-situ detection and hop-by-hop per-packet in-situ flow detection. In this case, in this embodiment of this application, a value of the HTI field may be redefined. For example, a value from values that are not defined in the current HTI field is redefined. For example, a meaning that the HTI field is equal to 10 is redefined. Specifically, when the value of the HTI field is 10, it indicates that the flow detection information includes indication information indicating that the in-situ flow detection is end-to-end per-packet in-situ flow detection and hop-by-hop per-packet in-situ flow detection. Correspondingly, the FIEH field may be further extended to obtain two timestamp fields: a first timestamp field and a second timestamp field. The packet 1 is used as an example. The first timestamp field carries a timestamp at which the head node obtains the packet 1. When the packet 1 is transmitted in the detection domain, a value of the first timestamp field remains unchanged, and is a timestamp T1 corresponding to the packet 1. The second timestamp field carries times at which the packet 1 is received through an outbound interface of the head node (that is, the interface 2 of the head node mentioned above), an interface of each transit node, and an inbound interface of the tail node when the packet is transmitted in the detection domain. A value of the second timestamp field is updated in real time as the packet 1 is transmitted. For example, the value of the second timestamp field is updated from the timestamp T4 to the timestamp T5, and then is updated from the timestamp T5 to the timestamp T6.

For the first timestamp field and the second timestamp field, refer to the descriptions of the timestamp field 1 in S102. Details are not described herein again.

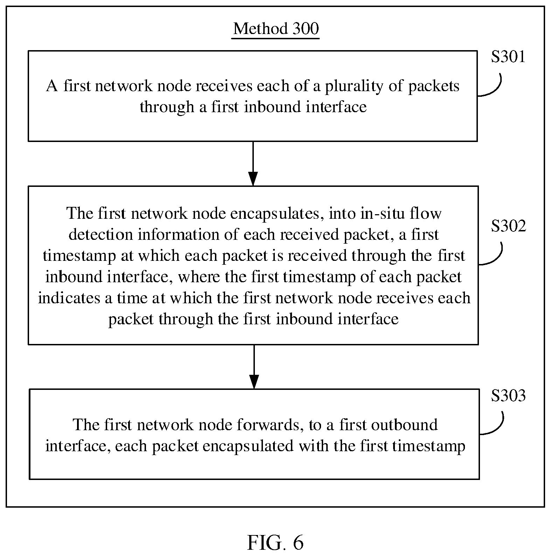

An embodiment of this application further provides an in-situ flow detection method 300. FIG. 6 is a schematic flowchart of the in-situ flow detection method according to an embodiment of this application. The method shown in FIG. 6 may be performed, for example, by a first network node in a detection domain. Specifically, the first network node may perform the following S301 to S303 for each of a plurality of packets in a first service flow received in a first in-situ flow detection period.

S301: The first network node receives each of the plurality of packets through a first inbound interface.

S302: The first network node encapsulates, into in-situ flow detection information of each received packet, a first timestamp at which each packet is received through the first inbound interface, where the first timestamp of each packet indicates a moment at which the first network node receives each packet through the first inbound interface.

S303: The first network node forwards, to a first outbound interface, each packet encapsulated with the first timestamp.

The method 300 may be applied to the method 100 provided in the foregoing embodiment, and is configured to perform the steps performed by the head node in the method 100. The method 300 may also be applied to the method 200 provided in the foregoing embodiment, and is configured to perform some steps performed by the head node, the transit node 1, and the tail node in the method 200.

Specifically:
When the method 300 is applied to the method 100 provided in the foregoing embodiment, the first network node may correspond to the head node in the method 100. The first inbound interface may correspond to the interface 1 of the head node in the method 100. The first timestamp of each packet may correspond to the timestamp T1 of each packet in the method 100. The first outbound interface may correspond to the interface 2 of the head node in the method 100.

When the method 300 is applied to the method 200 provided in the foregoing embodiment, the first network node may correspond to the head node, the transit node 1, or the tail node in the method 200. When the first network node corresponds to the head node in the method 200, the first inbound interface may correspond to the interface 1 of the head node, and the first timestamp of each packet may correspond to the timestamp T1 of each packet in the method 200. The first outbound interface may correspond to the interface 2 of the head node in the method 200. When the first network node corresponds to the transit node 1 in the method 200, the first inbound interface may correspond to the interface 1 of the transit node 1, and the first timestamp of each packet may correspond to the timestamp T5 of each packet in the method 200. The first outbound interface may correspond to the interface 2 of the transit node 1 in the method 200. When the first network node corresponds to the tail node in the method 200, the first inbound interface may be, for example, an interface through which the tail node receives each packet from an upstream node such as the transit node 1, and the first timestamp of each packet may be, for example, a timestamp at which the tail node receives each packet from the upstream node such as the transit node 1. For example, the first outbound interface may be an interface that forwards each packet to an external node outside the detection domain.

In an implementation, the in-situ flow detection information further includes indication information, and the indication information indicates that the in-situ flow detection is end-to-end per-packet in-situ flow detection and/or hop-by-hop per-packet in-situ flow detection.

In an implementation, the in-situ flow detection information is iFIT in-situ flow detection information.

In an implementation, the plurality of packets include a first packet, and that the first network node encapsulates the first timestamp of each packet into the in-situ flow detection information of each packet includes: The first network node encapsulates, into a first flow instruction extension header FIEH of an iFIT in-situ flow detection information of the first packet, the first timestamp at which the first packet is received through the first inbound interface.

In an implementation, the first iFIT in-situ flow detection information further includes indication information, and the indication information indicates that the in-situ flow detection is end-to-end per-packet in-situ flow detection and/or hop-by-hop per-packet in-situ flow detection.

In an implementation, when the indication information indicates that the in-situ flow detection is hop-by-hop per-packet in-situ flow detection, the method 300 further includes: The first network node receives, through the first outbound interface, each packet that is encapsulated with the first timestamp and that is from the first inbound interface; the first network node updates each first timestamp of the plurality of packets to a second timestamp of each packet, where the second timestamp of each packet indicates a moment at which each packet is received through the first outbound interface; and the first network node sends each packet encapsulated with the second timestamp to a second network node through the first outbound interface.

In this case, the method 300 may be applied to the method 200 provided in the foregoing method embodiment, and the first network node may correspond to the head node or the transit node 1 in the method 200. If the first network node corresponds to the head node in the method 200, the first outbound interface corresponds to the interface 2 of the head node in the method 200, the first timestamp of each packet corresponds to the timestamp T1 of each packet in the method 200, and the second timestamp of each packet corresponds to the timestamp T4 of each packet in the method 200. If the first network node corresponds to the transit node 1 in the method 200, the first outbound interface corresponds to the interface 2 of the transit node 1 in the method 200, the first timestamp of each packet corresponds to the timestamp T5 of each packet in the method 200, and the second timestamp of each packet corresponds to the timestamp T6 of each packet in the method 200.

In an implementation, when the indication information indicates that the in-situ flow detection is end-to-end per-packet in-situ flow detection and hop-by-hop per-packet in-situ flow detection, the method 300 further includes: The first network node receives, through the first outbound interface, each packet that is encapsulated with the first timestamp and that is from the first inbound interface; the first network node encapsulates the second timestamp of each packet into in-situ flow detection information of each received packet, where the second timestamp of each packet indicates a moment at which each packet is received through the first outbound interface; and the first network node sends each packet encapsulated with the first timestamp and the second timestamp to a second network node through the first outbound interface.

In this case, the first network node may be the head node in the method 100 or the method 200, the first inbound interface is the interface 1 of the head node in the method 100 or the method 200, the first outbound interface is the interface 2 of the head node in the method 100 or the method 200, the first timestamp of each packet corresponds to the timestamp T1 of each packet in the method 100 or the method 200, and the second timestamp of each packet corresponds to the timestamp T2 in the method 100 or the method 200. The second network node mentioned herein is a downstream node adjacent to the head node.

In an implementation, the method 300 further includes: The first network node determines a transmission delay of each packet in the first network node based on the first timestamp of each packet and the second timestamp of each packet; and the first network node determines, based on the transmission delay of each packet in the first network node, a transmission delay of internal transmission of the first service flow in the first network node in the first in-situ flow detection period.

In this case, the method 300 may be applied to the method 200 provided in the foregoing embodiment, and the first network node may correspond to the head node or the transit node 1 in the method 200. If the first network node corresponds to the head node in the method 200, the first outbound interface corresponds to the interface 2 of the head node in the method 200, the first timestamp of each packet corresponds to the timestamp T1 of each packet in the method 200, and the second timestamp of each packet corresponds to the timestamp T4 of each packet in the method 200. If the first network node corresponds to the transit node 1 in the method 200, the first outbound interface corresponds to the interface 2 of the transit node 1 in the method 200, the first timestamp of each packet corresponds to the timestamp T5 of each packet in the method 200, and the second timestamp of each packet corresponds to the timestamp T6 of each packet in the method 200.

In a possible implementation, when the indication information indicates that the in-situ flow detection is hop-by-hop per-packet in-situ flow detection, the method 300 further includes: The first network node receives, through the first outbound interface, each packet that is encapsulated with the first timestamp and that is from the first inbound interface; the first network node determines a second timestamp of each packet, where the second timestamp of each packet indicates a moment at which each packet is received through the first outbound interface; the first network node determines, based on the first timestamp carried in each packet and the second timestamp of each packet, a transmission delay of each packet in the first network node; and the first network node determines, based on the transmission delay of each packet in the first network node, a transmission delay of internal transmission of the first service flow in the first network node in the first in-situ flow detection period.

In this case, for example, the first network node may correspond to the tail node in the method 200, the first timestamp carried in each packet may correspond to the timestamp T6 of each packet in the method 200, and the second timestamp of each packet may correspond to the timestamp at which each packet is received through the outbound interface of the tail node in the method 200.

In an implementation, the method 300 further includes: The first network node sends, to a controller, a transmission delay of internal transmission of the first service flow in the first network node in the first in-situ flow detection period.

In this case, the method 300 may be applied to the method 200 provided in the foregoing embodiment, and the first network node may correspond to the head node or the transit node 1 in the method 200. The controller may correspond to the control management device in the method 200.

In an implementation, the transmission delay of internal transmission of the first service flow in the first network node in the first in-situ flow detection period includes any one or more of the maximum transmission delay of internal transmission of the first service flow in the first network node in the first in-situ flow detection period, the minimum transmission delay of internal transmission of the first service flow in the first network node in the first in-situ flow detection period, and the average transmission delay of internal transmission of the first service flow in the first network node in the first in-situ flow detection period.

In an implementation, that the first network node receives each of the plurality of packets through a first inbound interface includes: the first network node receives, through the first inbound interface, each packet sent by a third network node, where the third network node is connected to the first inbound interface through a second outbound interface, each received packet carries a third timestamp, and the third timestamp in each packet is a moment at which the third network node receives each packet through the second outbound interface; and that the first network node encapsulates, into the in-situ flow detection information of each received packet, the first timestamp at which each packet is received through the first inbound interface includes: the first network node updates the third timestamp in each packet to the first timestamp.

In this case, the method 300 may be applied to the method 200 provided in the foregoing embodiment, and the first network node may correspond to the transit node 1 or the tail node in the method 200. When the first network node corresponds to the transit node 1 in the method 200, the first inbound interface corresponds to the interface 1 of the transit node 1 in the method 200, the third network device may correspond to the head node in the method 200, the second outbound interface corresponds to the interface 2 of the head node in the method 200, and the first timestamp of each packet corresponds to the timestamp T5 of each packet in the method 200. The third timestamp of each packet corresponds to the timestamp T4 of each packet in the method 200. When the first network node corresponds to the tail node in the method 200, the first inbound interface corresponds to an interface for interaction between the tail node and the transit node 1 in the method 200, the third network device may correspond to the transit node 1 in the method 200, the second outbound interface is corresponding to the interface 2 of the transit node 1 in the method 200, and the first timestamp of each packet is corresponding to a timestamp at which each packet is received through the tail node in the method 200. The third timestamp of each packet corresponds to the timestamp T6 of each packet in the method 200.

In an implementation, the method 300 further includes: The first network node determines a link transmission delay of each packet between the third network node and the first network node based on the third timestamp carried in each packet and the first timestamp of each packet; and the first network node determines, based on the link transmission delay of each packet between the third network node and the first network node, a link transmission delay of the first service flow between the third network node and the first network node in the first in-situ flow detection period.

In an implementation, the method 300 further includes: The first network node sends, to a controller, the link transmission delay of the first service flow between the third network node and the first network node in the first in-situ flow detection period.

In an implementation, the link transmission delay of the first service flow between the third network node and the first network node in the first in-situ flow detection period includes any one or more of a maximum link transmission delay of the first service flow between the third network node and the first network node in the first in-situ flow detection period, a minimum link transmission delay of the first service flow between the third network node and the first network node in the first in-situ flow detection period, and an average link transmission delay of the first service flow between the third network node and the first network node in the first in-situ flow detection period.

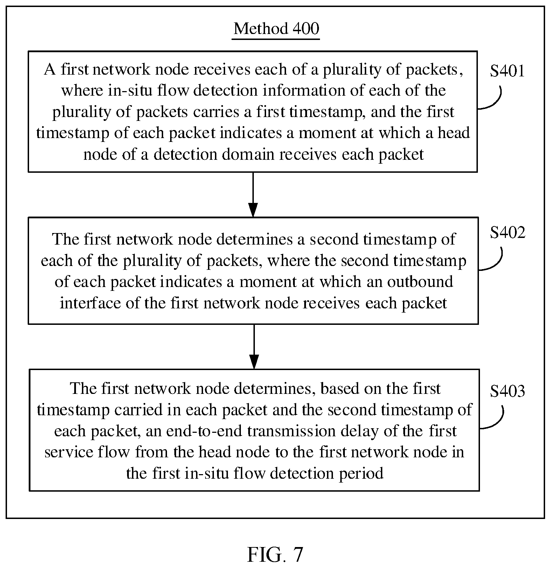

An embodiment of this application further provides an in-situ flow detection method 400. FIG. 7 is a schematic flowchart of the in-situ flow detection method according to an embodiment of this application. The method shown in FIG. 7 may be performed, for example, by a first network node in a detection domain. Specifically, the first network node may perform the following S401 to S403 for each of a plurality of packets in a first service flow received in a first in-situ flow detection period.

S401: The first network node receives each of the plurality of packets, where in-situ flow detection information of each of the plurality of packets carries a first timestamp, and the first timestamp of each packet indicates a moment at which a head node in the detection domain receives each packet.

S402: The first network node determines a second timestamp of each of the plurality of packets, where the second timestamp of each packet indicates a moment at which each packet is received through an outbound interface of the first network node.

S403: The first network node determines, based on the first timestamp carried in each packet and the second timestamp of each packet, an end-to-end transmission delay of the first service flow from the head node to the first network node in the first in-situ flow detection period.

The method 400 may be applied to the method 100 provided in the foregoing embodiment, and is configured to perform steps performed by the transit node 1 or the tail node in the method 100.

Specifically, when the method 400 is used to perform the steps performed by the tail node in the method 100, the first timestamp of each packet corresponds to the timestamp T1 of each packet in the method 100, and the second timestamp of each packet corresponds to the timestamp T2 of each packet in the method 100. When the method 400 is used to perform the steps performed by the transit node 1 in the method 100, the first timestamp of each packet corresponds to the timestamp T1 of each packet in the method 100, and the second timestamp of each packet corresponds to the timestamp T3 of each packet in the method 100.

In an implementation, the in-situ flow detection information further includes indication information, and the indication information indicates that the in-situ flow detection is end-to-end per-packet in-situ flow detection.

In an implementation, the plurality of packets include a first packet, the first packet includes first iFIT in-situ flow detection information, the first timestamp is located in a first flow instruction extension header FIEH in the first iFIT in-situ flow detection information, the iFIT in-situ flow detection information further includes indication information, and the indication information indicates that the in-situ flow detection is end-to-end per-packet in-situ flow detection.

In an implementation, that the first network node determines, based on the first timestamp carried in each packet and the second timestamp of each packet, the end-to-end transmission delay of the first service flow from the head node to the first network node in the first in-situ flow detection period includes: The first network node determines, based on the first timestamp carried in each packet and the second timestamp of each packet, an end-to-end transmission delay of each packet from the head node to the first network node; and the first network node determines, based on the end-to-end transmission delay of each packet from the head node to the first network node, the end-to-end transmission delay of the first service flow from the head node to the first network node in the first in-situ flow detection period. In an implementation, the method 400 further includes: The first network node sends, to a controller, the end-to-end transmission delay of the first service flow from the head node to the first network node in the first in-situ flow detection period. The controller mentioned herein may correspond to the control management device in the method 100.

In an implementation, the end-to-end transmission delay of the first service flow from the head node to the first network node in the first in-situ flow detection period includes any one or more of the maximum end-to-end transmission delay of the first service flow from the head node to the first network node in the first in-situ flow detection period, the minimum end-to-end transmission delay of the first service flow from the head node to the first network node in the first in-situ flow detection period, and the average end-to-end transmission delay of the first service flow from the head node to the first network node in the first in-situ flow detection period.

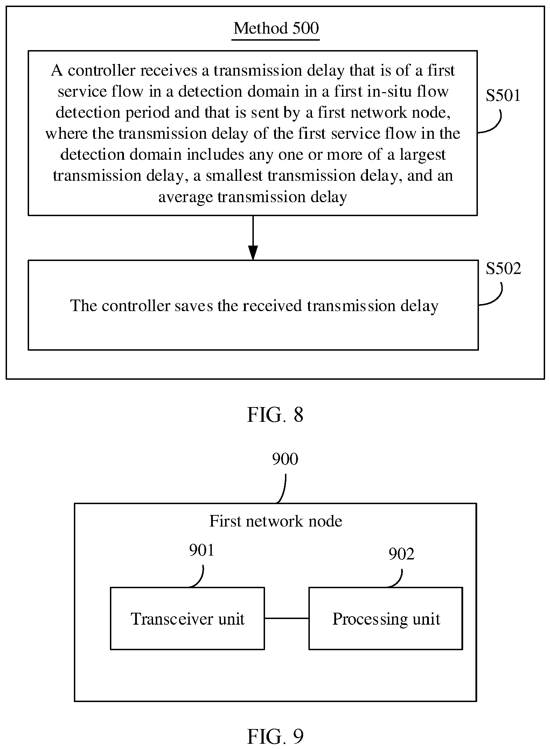

An embodiment of this application further provides an in-situ flow detection method 500. FIG. 8 is a schematic flowchart of the in-situ flow detection method according to an embodiment of this application. The method shown in FIG. 8 includes, for example, the following S501 and S502.

S501: A controller receives a transmission delay that is of a first service flow in a detection domain in a first in-situ flow detection period and that is sent by a first network node, where the transmission delay of the first service flow in the detection domain includes any one or more of a maximum transmission delay, a minimum transmission delay, and an average transmission delay.

S502: The controller saves the received transmission delay.

For example, the method 500 may be applied to the method 100 or the method 200 provided in the foregoing embodiments, and is used to receive the transmission delays reported by the transit node 1 and the tail node in the method 100, or is used to receive the transmission delays reported by the head node, the transit node 1, and the tail node in the method 200. After saving the received transmission delay, for example, the controller may perform analysis and processing based on the saved transmission delay, to determine network performance of the detection domain.

In an implementation, the transmission delay of the first service flow in the detection domain includes an end-to-end transmission delay from a head node in the detection domain to the first network node.

In this case, for example, the first network node may correspond to the transit node 1 or the tail node in the method 100.

In an implementation, the transmission delay of the first service flow in the detection domain includes a transmission delay of the first service flow in the first network node.

In this case, for example, the first network node may correspond to the head node, the transit node 1, or the tail node in the method 200.

In an implementation, the transmission delay of the first service flow in the detection domain includes a transmission delay of the first service flow between the first network node and a second network node, where the first network node is a transit node or a tail node in the detection domain, and the second network node is an upstream node of the first network node.

In this case, for example, the first network node may correspond to the transit node 1 in the method 100, and the second network node may correspond to the head node in the method 100. Alternatively, the first network node may correspond to the tail node in the method 100, and the second network node may correspond to the head node in the method 100. Alternatively, the first network node may correspond to the transit node 1 in the method 200, and the second network node may correspond to the head node in the method 200. Alternatively, for example, the first network node may correspond to the tail node in the method 200, and the second network node may correspond to the transit node 1 in the method 200.

In an implementation, the transmission delay of the first service flow in the detection domain includes a link transmission delay of the first service flow between the first network node and the second network node, where the second network node is an upstream node adjacent to the first network node.

If the head node and the transit node 1 in the method 100 are adjacent nodes, for example, the first network node may correspond to the tail node in the method 100, and the second network node may correspond to the head node in the method 100. If the transit node 1 and the tail node in the method 100 are adjacent nodes, for example, the first network node may correspond to the tail node in the method 100, and the second network node may correspond to the head node in the method 100. If the head node and the transit node 1 in the method 200 are adjacent nodes, for example, the first network node may correspond to the transit node 1 in the method 200, and the second network node may correspond to the head node in the method 200. If the transit node 1 and the tail node in the method 200 are adjacent nodes, the first network node may correspond to the tail node in the method 200, and the second network node may correspond to the transit node 1 in the method 200.

In addition, an embodiment of this application further provides a first network node 900. FIG. 9 is a schematic diagram of a structure of the first network node according to an embodiment of this application. The first network node 900 includes a transceiver unit 901 and a processing unit 902.

The transceiver unit 901 is configured to perform receiving and sending operations performed by the first network node in the method 600; and the processing unit 902 is configured to perform an operation other than the receiving and sending operations performed by the first network node in the method 600. For example, the transceiver unit 901 is configured to receive each of a plurality of packets through a first inbound interface; and the processing unit 902 is configured to: encapsulate, into in-situ flow detection information of each received packet, a first timestamp of each packet received through the first inbound interface, where the first timestamp of each packet indicates a moment at which the first network node receives each packet through the first inbound interface, and forward each packet encapsulated with the first timestamp to a first outbound interface.

Alternatively, the transceiver unit 901 is configured to perform receiving and sending operations performed by the first network node in the method 700; and the processing unit 902 is configured to perform an operation other than the receiving and sending operations performed by the first network node in the method 700. For example, the transceiver unit 901 is configured to receive each of the plurality of packets, where each of the plurality of packets carries a first timestamp, and the first timestamp of each packet indicates a moment at which a head node in the detection domain receives each packet; and the processing unit 902 is configured to: determine a second timestamp of each of the plurality of packets, where the second timestamp of each packet indicates a moment at which each packet is received through an outbound interface of the first network node; and determine, based on the first timestamp carried in each packet and the second timestamp of each packet, an end-to-end transmission delay of the first service flow from the head node to the first network node in the first in-situ flow detection period.

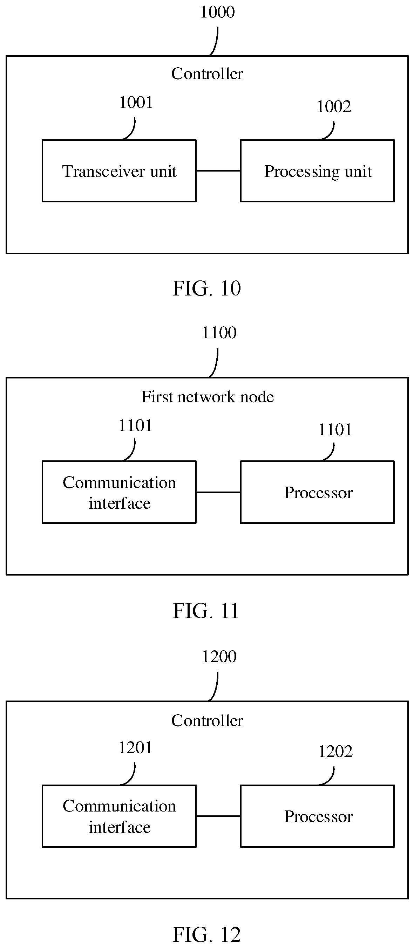

In addition, an embodiment of this application further provides a controller 1000, as shown in FIG. 10. FIG. 10 is a schematic diagram of a structure of a controller according to an embodiment of this application. The controller 1000 includes a transceiver unit 1001 and a processing unit 1002. The transceiver unit 1001 is configured to perform receiving and sending operations performed by the controller in the foregoing embodiments. The transceiver unit 1001 is configured to perform receiving and sending operations performed by the controller in the method 800; and the processing unit 1002 is configured to perform an operation other than the receiving and sending operations performed by the controller in the method 800. For example, the transceiver unit 1001 is configured to receive a transmission delay that is of a first service flow in a detection domain in a first in-situ flow detection period and that is sent by a first network node, where the transmission delay of the first service flow in the detection domain includes any one or more of a maximum transmission delay, a minimum transmission delay, and an average transmission delay; and the processing unit 1002 is configured to store the received transmission delay.

In addition, an embodiment of this application further provides a first network node 1100. FIG. 11 is a schematic diagram of a structure of the first network node according to an embodiment of this application. The first network node 1100 includes a communication interface 1101 and a processor 1102 connected to the communication interface 1101.

The communication interface 1101 is configured to perform receiving and sending operations performed by the first network node in the method 600; and the processor 1102 is configured to perform an operation other than the receiving and sending operations performed by the first network node in the method 600. For example, the communication interface 1101 includes a first inbound interface and a first outbound interface, where the first inbound interface is configured to receive each of a plurality of packets; and the processor 1102 is configured to: encapsulate, into in-situ flow detection information of each received packet, a first timestamp of each packet received through the first inbound interface, where the first timestamp of each packet indicates a moment at which the first network node receives each packet through the first inbound interface; and forward each packet encapsulated with the first timestamp to a first outbound interface. Correspondingly, the first outbound interface is configured to receive each packet encapsulated with the first timestamp.

Alternatively, the communication interface 1101 is configured to perform receiving and sending operations performed by the first network node in the method 700; and the processor 1102 is configured to perform an operation other than the receiving and sending operations performed by the first network node in the method 700. For example, the communication interface 1101 includes an inbound interface and an outbound interface. The inbound interface is configured to receive each of the plurality of packets, where each of the plurality of packets carries a first timestamp, and the first timestamp of each packet indicates a moment at which a head node in the detection domain receives each packet; the outbound interface is configured to receive each packet from the inbound interface; and the processor 1102 is configured to: determine a second timestamp of each of the plurality of packets, where the second timestamp of each packet indicates a moment at which each packet is received through an outbound interface of the first network node; and determine, based on the first timestamp carried in each packet and the second timestamp of each packet, an end-to-end transmission delay of the first service flow from the head node to the first network node in the first in-situ flow detection period.

In addition, an embodiment of this application further provides a controller 1200. FIG. 12 is a schematic diagram of a structure of the controller according to an embodiment of this application. The controller 1200 includes a communication interface 1201 and a processor 1202 connected to the communication interface 1201. The communication interface 1201 is configured to perform receiving and sending operations performed by the controller in the method 800; and the processor 1202 is configured to perform an operation other than the receiving and sending operations performed by the controller in the method 800. For example, the communication interface 1201 is configured to receive a transmission delay that is of a first service flow in a detection domain in a first in-situ flow detection period and that is sent by a first network node, where the transmission delay of the first service flow in the detection domain includes any one or more of a maximum transmission delay, a minimum transmission delay, and an average transmission delay; and the processor 1202 is configured to store the received transmission delay.

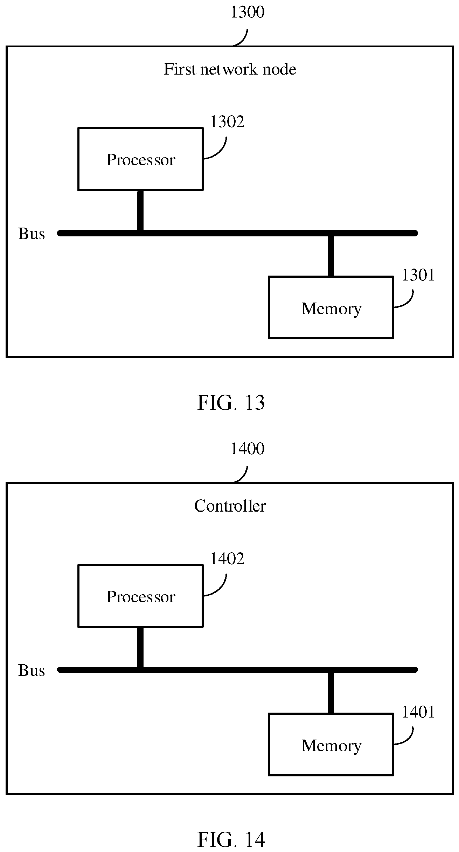

In addition, an embodiment of this application further provides a first network node 1300. FIG. 13 is a schematic diagram of a structure of the first network node according to an embodiment of this application. The first network node 1300 includes a memory 1301 and a processor 1302. The memory 1301 is configured to store program code; and the processor 1302 is configured to run instructions in the program code, so that the first network node 1300 performs the steps performed by the first network node in the method 600, or the first network node 1300 performs the steps performed by the first network node in the method 700.

In addition, an embodiment of this application further provides a controller 1400. FIG. 14 is a schematic diagram of a structure of the controller according to an embodiment of this application. The controller 1400 includes a memory 1401 and a processor 1402. The memory 1401 is configured to store program code; and the processor 1402 is configured to run instructions in the program code, so that the controller 1400 performs the steps performed by the controller in the method 800.

In addition, an embodiment of this application further provides a communication system. The communication system includes a first network node 1300 and a controller 1400. For the first network node 1300 and the controller 1400, refer to related descriptions in the foregoing embodiments. Details are not described herein again.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other units not expressly listed or inherent to such a process, method, system, product, or device.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiment is merely an example. For example, division into the units is merely logical service division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each of the units may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, the services described in the present invention may be implemented by using hardware, software, firmware, or any combination thereof. When the present invention is implemented by using the software, the services may be stored in a computer-readable medium or transmitted as one or more instructions or code in the computer-readable medium. The computer-readable medium includes a computer storage medium and a communication medium, and the communication medium includes any medium that enables a computer program to be transmitted from one place to another. The storage medium may be any available medium accessible to a general-purpose or special-purpose computer.

The objectives, technical solutions, and beneficial effects of the present invention have been further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An in-situ flow detection method, comprising:
performing, by a first network node in a detection domain, the following operations on each of a plurality of packets in a first service flow received in a first in-situ flow detection period:
receiving, by the first network node, each of the plurality of packets through a first inbound interface;
encapsulating, by the first network node into in-situ flow detection information of each received packet, a first timestamp at which each packet is received through the first inbound interface, wherein the first timestamp of each packet indicates a moment at which the first network node receives each packet through the first inbound interface; and
forwarding, by the first network node to a first outbound interface, each packet encapsulated with the first timestamp.

2. The method according to claim 1, wherein the in-situ flow detection information further comprises indication information, and the indication information indicates that the in-situ flow detection is end-to-end per-packet in-situ flow detection and/or hop-by-hop per-packet in-situ flow detection.

3. The method according to claim 1 or 2, wherein the in-situ flow detection information is iFIT in-situ flow detection information.

4. The method according to any one of claims 1 to 3, wherein the method further comprises:
receiving, by the first network node through the first outbound interface, each packet that is encapsulated with the first timestamp and that is from the first inbound interface;
updating, by the first network node, each first timestamp of the plurality of packets to a second timestamp of each packet, wherein the second timestamp of each packet indicates a moment at which each packet is received through the first outbound interface; and
sending, by the first network node to a second network node through the first outbound interface, each packet encapsulated with the second timestamp.

5. The method according to any one of claims 1 to 3, wherein the method further comprises:
receiving, by the first network node through the first outbound interface, each packet that is encapsulated with the first timestamp and that is from the first inbound interface;
encapsulating, by the first network node, the second timestamp of each of the plurality of packets into received in-situ flow detection information of each packet, wherein the second timestamp of each packet indicates a moment at which each packet is received through the first outbound interface; and
sending, by the first network node to a second network node through the first outbound interface, each packet encapsulated with the first timestamp and the second timestamp.

6. The method according to claim 4 or 5, wherein the method further comprises:
determining, by the first network node based on the first timestamp carried in each packet and the second timestamp of each packet, a transmission delay of each packet in the first network node; and
determining, by the first network node based on the transmission delay of each packet in the first network node, a transmission delay of internal transmission of the first service flow in the first network node in the first in-situ flow detection period.

7. The method according to any one of claims 1 to 3, wherein the method further comprises:
receiving, by the first network node through the first outbound interface, each packet that is encapsulated with the first timestamp and that is from the first inbound interface;
determining, by the first network node, a second timestamp of each packet, wherein the second timestamp of each packet indicates a moment at which each packet is received through the first outbound interface;
determining, by the first network node based on the first timestamp carried in each packet and the second timestamp of each packet, a transmission delay of each packet in the first network node; and
determining, by the first network node based on the transmission delay of each packet in the first network node, a transmission delay of internal transmission of the first service flow in the first network node in the first in-situ flow detection period.

8. The method according to claim 6 or 7, wherein the method further comprises:
sending, by the first network node to a controller, a transmission delay of internal transmission of the first service flow in the first network node in the first in-situ flow detection period.

9. The method according to any one of claims 6 to 8, wherein the transmission delay of internal transmission of the first service flow in the first network node in the first in-situ flow detection period comprises one or more of the following:
a maximum transmission delay of internal transmission of the first service flow in the first network node in the first in-situ flow detection period, a minimum transmission delay of internal transmission of the first service flow in the first network node in the first in-situ flow detection period, and an average transmission delay of internal transmission of the first service flow in the first network node in the first in-situ flow detection period.

10. The method according to claims 1 to 9, wherein
the receiving, by the first network node, each of the plurality of packets through a first inbound interface comprises:
receiving, by the first network node through the first inbound interface, each packet sent by a third network node, wherein the third network node is connected to the first inbound interface through a second outbound interface, each received packet carries a third timestamp, and the third timestamp in each packet is a moment at which the third network node receives each packet through the second outbound interface; and
the encapsulating, by the first network node into in-situ flow detection information of each received packet, a first timestamp at which each packet is received through the first inbound interface comprises:
updating, by the first network node, the third timestamp in each packet to the first timestamp.

11. The method according to claim 10, wherein the method further comprises:
determining, by the first network node based on the third timestamp carried in each packet and the first timestamp of each packet, a link transmission delay of each packet between the third network node and the first network node; and
determining, by the first network node based on the link transmission delay of each packet between the third network node and the first network node, a link transmission delay of the first service flow between the third network node and the first network node in the first in-situ flow detection period.

12. The method according to claim 11, wherein the method further comprises:
sending, by the first network node to a controller, the link transmission delay of the first service flow between the third network node and the first network node in the first in-situ flow detection period.

13. The method according to claim 11 or 12, wherein the link transmission delay of the first service flow between the third network node and the first network node in the first in-situ flow detection period comprises any one or more of the following:
a maximum link transmission delay of the first service flow between the third network node and the first network node in the first in-situ flow detection period, a minimum link transmission delay of the first service flow between the third network node and the first network node in the first in-situ flow detection period, and an average link transmission delay of the first service flow between the third network node and the first network node in the first in-situ flow detection period.

14. An in-situ flow detection method, wherein the method comprises:
performing, by a first network node in a detection domain, the following operations on each of a plurality of packets in a first service flow received in a first in-situ flow detection period:
receiving, by the first network node, each of the plurality of packets, wherein in-situ flow detection information of each of the plurality of packets carries a first timestamp, and the first timestamp of each packet indicates a moment at which a head node in the detection domain receives each packet;
determining, by the first network node, a second timestamp of each of the plurality of packets, wherein the second timestamp of each packet indicates a moment at which each packet is received through an outbound interface of the first network node; and
determining, by the first network node based on the first timestamp carried in each packet and the second timestamp of each packet, an end-to-end transmission delay of the first service flow from the head node to the first network node in the first in-situ flow detection period.

15. The method according to claim 14, wherein the in-situ flow detection information further comprises indication information, and the indication information indicates that the in-situ flow detection is end-to-end per-packet in-situ flow detection.

16. The method according to claim 14 or 15, wherein the determining, by the first network node based on the first timestamp carried in each packet and the second timestamp of each packet, an end-to-end transmission delay of the first service flow from the head node to the first network node in the first in-situ flow detection period comprises:
determining, by the first network node based on the first timestamp carried in each packet and the second timestamp of each packet, an end-to-end transmission delay of each packet from the head node to the first network node; and
determining, by the first network node based on the end-to-end transmission delay of each packet from the head node to the first network node, an end-to-end transmission delay of the first service flow from the head node to the first network node in the first in-situ flow detection period.

17. The method according to claim 16, wherein the method further comprises:
sending, by the first network node to a controller, the end-to-end transmission delay of the first service flow from the head node to the first network node in the first in-situ flow detection period.

18. The method according to claim 16 or 17, wherein the end-to-end transmission delay of the first service flow from the head node to the first network node in the first in-situ flow detection period comprises any one or more of the following:
a maximum end-to-end transmission delay of the first service flow from the head node to the first network node in the first in-situ flow detection period, a minimum end-to-end transmission delay of the first service flow from the head node to the first network node in the first in-situ flow detection period, and an average end-to-end transmission delay of the first service flow from the head node to the first network node in the first in-situ flow detection period.

19. An in-situ flow detection method, wherein the method comprises:
receiving, by a controller, a transmission delay that is of a first service flow in a detection domain in a first in-situ flow detection period and that is sent by a first network node, wherein the transmission delay of the first service flow in the detection domain comprises any one or more of a maximum transmission delay, a minimum transmission delay, and an average transmission delay; and
saving, by the controller, the received transmission delay.

20. The method according to claim 19, wherein the transmission delay of the first service flow in the detection domain comprises:
an end-to-end transmission delay from a head node in the detection domain to the first network node.

21. The method according to claim 19, wherein the transmission delay of the first service flow in the detection domain comprises:
a transmission delay of the first service flow in the first network node.

22. The method according to claim 19, wherein the transmission delay of the first service flow in the detection domain comprises:
a transmission delay of the first service flow between the first network node and a second network node, wherein the first network node is a transit node or a tail node in the detection domain, and the second network node is an upstream node of the first network node.

23. The method according to claim 22, wherein the transmission delay of the first service flow in the detection domain comprises:
a link transmission delay of the first service flow between the first network node and the second network node, wherein the second network node is an upstream node adjacent to the first network node.

24. A first network node, comprising: a first inbound interface, a first outbound interface, and a processor communicatively connected to the first inbound interface and the first outbound interface, wherein
the first inbound interface is configured to perform an operation performed by the first inbound interface in the method according to any one of claims 1 to 13;
the first outbound interface is configured to perform an operation performed by the first outbound interface in the method according to any one of claims 1 to 13; and
the processor is configured to perform an operation other than the operations performed by the first inbound interface and the first outbound interface in the method according to any one of claims 1 to 13; or
the first inbound interface is configured to perform an operation of receiving each of the plurality of packets in the method according to any one of claims 14 to 18;
the first outbound interface is configured to perform an operation of receiving each packet from the first inbound interface in the method according to any one of claims 14 to 18; and
the processor is configured to perform an operation other than the operations performed by the first inbound interface and the first outbound interface in the method according to any one of claims 14 to 18.

25. A controller, comprising:
a communication interface, configured to perform sending and receiving operations in the method according to any one of claims 19 to 23; and
a processor, connected to the communication interface, wherein
the processor is configured to perform an operation other than the operations performed by the communication interface in the method according to any one of claims 19 to 23.

26. A first network node, wherein the first network node comprises a memory and a processor, wherein
the memory is configured to store program code; and
the processor is configured to run instructions in the program code, to enable the first network node to perform the method according to any one of claims 1 to 18.

27. A controller, wherein the controller comprises a memory and a processor, wherein
the memory is configured to store program code; and
the processor is configured to run instructions in the program code, to enable the controller to perform the method according to any one of claims 19 to 23.

28. A computer-readable storage medium, wherein the computer-readable storage medium stores instructions, and when the instructions are run on a computer, the computer is enabled to perform the method according to any one of claims 1 to 23.

29. A communication system, comprising a first network node and a controller, wherein the first network node is configured to perform the method according any one of claims 1 to 18.

30. A communication system, comprising a first network node and a controller, wherein the controller is configured to perform the method according any one of claims 19 to 23.

31. An apparatus used in a first network node, comprising:
a receiving unit, configured to: receive, through a first inbound interface, each of a plurality of packets in a first service flow received in a first in-situ flow detection period;
a processing unit, configured to: encapsulate, into in-situ flow detection information of each received packet, a first timestamp at which each packet is received through the first inbound interface, wherein the first timestamp of each packet indicates a moment at which the first network node receives each packet through the first inbound interface; and
a sending unit, configured to: forward, to a first outbound interface, each packet encapsulated with the first timestamp.

32. The apparatus according to claim 31, wherein the in-situ flow detection information further comprises indication information, and the indication information indicates that the in-situ flow detection is end-to-end per-packet in-situ flow detection and/or hop-by-hop per-packet in-situ flow detection.

33. The apparatus according to claim 31 or 32, wherein the in-situ flow detection information is iFIT in-situ flow detection information

34. The apparatus according to any one of claims 31 to 33, wherein
the receiving unit is further configured to: receive, through the first outbound interface, each packet that is encapsulated with the first timestamp and that is from the first inbound interface;
the processing unit is further configured to update each first timestamp of the plurality of packets to a second timestamp of each packet, wherein the second timestamp of each packet indicates a moment at which each packet is received through the first outbound interface; and
the sending unit is further configured to: send, to a second network node through the first outbound interface, each packet encapsulated with the second timestamp.

35. The apparatus according to any one of claims 31 to 33, wherein
the receiving unit is further configured to: receive, through the first outbound interface, each packet that is encapsulated with the first timestamp and that is from the first inbound interface;
the processing unit is further configured to encapsulate the second timestamp of each of the plurality of packets into in-situ flow detection information of each received packet, wherein the second timestamp of each packet indicates a moment at which each packet is received through the first outbound interface; and
the sending unit is further configured to: send, to a second network node through the first outbound interface, each packet encapsulated with the first timestamp and the second timestamp.

36. The apparatus according to claim 34 or 35, wherein
the processing unit is further configured to: determine, based on the first timestamp carried in each packet and the second timestamp of each packet, a transmission delay of each packet in the first network node; and
the processing unit is further configured to: determine, based on the transmission delay of each packet in the first network node, a transmission delay of internal transmission of the first service flow in the first network node in the first in-situ flow detection period.

37. The apparatus according to any one of claims 31 to 33, wherein
the receiving unit is further configured to: receive, through the first outbound interface, each packet that is encapsulated with the first timestamp and that is from the first inbound interface;
the processing unit is further configured to determine a second timestamp of each packet, wherein the second timestamp of each packet indicates a moment at which each packet is received through the first outbound interface;
the processing unit is further configured to: determine, based on the first timestamp carried in each packet and the second timestamp of each packet, a transmission delay of each packet in the first network node; and
the processing unit is further configured to: determine, based on the transmission delay of each packet in the first network node, a transmission delay of internal transmission of the first service flow in the first network node in the first in-situ flow detection period.

38. The apparatus according to claim 36 or 37, wherein
the sending unit is further configured to: send, to a controller, a transmission delay of internal transmission of the first service flow in the first network node in the first in-situ flow detection period.

39. The apparatus according to any one of claims 36 to 38, wherein the transmission delay of internal transmission of the first service flow in the first network node in the first in-situ flow detection period comprises one or more of the following:
a maximum transmission delay of internal transmission of the first service flow in the first network node in the first in-situ flow detection period, a minimum transmission delay of internal transmission of the first service flow in the first network node in the first in-situ flow detection period, and an average transmission delay of internal transmission of the first service flow in the first network node in the first in-situ flow detection period.

40. The apparatus according to claims 31 to 39, wherein
that the first network node receives each of the plurality of packets through a first inbound interface comprises:
the first network node receives, through the first inbound interface, each packet sent by a third network node, wherein the third network node is connected to the first inbound interface through a second outbound interface, each received packet carries a third timestamp, and the third timestamp in each packet is a moment at which the third network node receives each packet through the second outbound interface; and
that the first network node encapsulates, into in-situ flow detection information of each received packet, a first timestamp at which each packet is received through the first inbound interface comprises:
the first network node updates the third timestamp in each packet to the first timestamp.

41. The apparatus according to claim 40, wherein
the processing unit is further configured to: determine, based on the third timestamp carried in each packet and the first timestamp of each packet, a link transmission delay of each packet between the third network node and the first network node; and
the processing unit is further configured to: determine, based on the link transmission delay of each packet between the third network node and the first network node, a link transmission delay of the first service flow between the third network node and the first network node in the first in-situ flow detection period.

42. The apparatus according to claim 41, wherein
the sending unit is further configured to: send, to a controller, the link transmission delay of the first service flow between the third network node and the first network node in the first in-situ flow detection period.

43. The apparatus according to claim 41 or 42, wherein the link transmission delay of the first service flow between the third network node and the first network node in the first in-situ flow detection period comprises any one or more of the following:
a maximum link transmission delay of the first service flow between the third network node and the first network node in the first in-situ flow detection period, a minimum link transmission delay of the first service flow between the third network node and the first network node in the first in-situ flow detection period, and an average link transmission delay of the first service flow between the third network node and the first network node in the first in-situ flow detection period.

44. An apparatus used in a first network node, comprising:
a receiving unit, configured to receive each of a plurality of packets in a first service flow in a first in-situ flow detection period, wherein in-situ flow detection information of each of the plurality of packets carries a first timestamp, and the first timestamp of each packet indicates a moment at which a head node in the detection domain receives each packet; and
a determining unit, configured to determine a second timestamp of each of the plurality of packets, wherein the second timestamp of each packet indicates a moment at which each packet is received through an outbound interface of the first network node, wherein
the determining unit is further configured to: determine, based on the first timestamp carried in each packet and the second timestamp of each packet, an end-to-end transmission delay of the first service flow from the head node to the first network node in the first in-situ flow detection period.

45. The apparatus according to claim 44, wherein the in-situ flow detection information further comprises indication information, and the indication information indicates that the in-situ flow detection is end-to-end per-packet in-situ flow detection.

46. The apparatus according to claim 44 or 45, wherein the determining unit is configured to:
determine, based on the first timestamp carried in each packet and the second timestamp of each packet, an end-to-end transmission delay of each packet from the head node to the first network node; and
determine, based on the end-to-end transmission delay of each packet from the head node to the first network node, an end-to-end transmission delay of the first service flow from the head node to the first network node in the first in-situ flow detection period.

47. The apparatus according to claim 46, wherein the apparatus further comprises:
a sending unit, configured to send, to a controller, the end-to-end transmission delay of the first service flow from the head node to the first network node in the first in-situ flow detection period.

48. The method according to claim 46 or 47, wherein the end-to-end transmission delay of the first service flow from the head node to the first network node in the first in-situ flow detection period comprises any one or more of the following:
a maximum end-to-end transmission delay of the first service flow from the head node to the first network node in the first in-situ flow detection period, a minimum end-to-end transmission delay of the first service flow from the head node to the first network node in the first in-situ flow detection period, and an average end-to-end transmission delay of the first service flow from the head node to the first network node in the first in-situ flow detection period.

49. An apparatus used in a controller, comprising:
a receiving unit, configured to receive a transmission delay that is of a first service flow in a detection domain in a first in-situ flow detection period and that is sent by a first network node, wherein the transmission delay of the first service flow in the detection domain comprises any one or more of a maximum transmission delay, a minimum transmission delay, and an average transmission delay; and
a saving unit, configured to save the received transmission delay.

50. The apparatus according to claim 49, wherein the transmission delay of the first service flow in the detection domain comprises:
an end-to-end transmission delay from a head node in the detection domain to the first network node.

51. The apparatus according to claim 49, wherein the transmission delay of the first service flow in the detection domain comprises:
a transmission delay of the first service flow in the first network node.

52. The apparatus according to claim 49, wherein the transmission delay of the first service flow in the detection domain comprises:
a transmission delay of the first service flow between the first network node and a second network node, wherein the first network node is a transit node or a tail node in the detection domain, and the second network node is an upstream node of the first network node.

53. The apparatus according to claim 52, wherein the transmission delay of the first service flow in the detection domain comprises:
a link transmission delay of the first service flow between the first network node and the second network node, wherein the second network node is an upstream node adjacent to the first network node.

54. A computer program product comprising instructions or a computer program, wherein when the computer program product runs on a computer, the computer is enabled to perform the method according to any one of claims 1 to 23.
